# EUROPEAN PATENT SPECIFICATION

(11) **EP 2 790 334 B1**
(45) Date of publication and mention of the grant of the patent: **15.03.2017**
(21) Application number: 14163290.1
(22) Date of filing: 03.04.2014
(51) Int. Cl.: H04B 7/26, H04W 84/20, H04W 72/00

(54) **Wireless communication system**
Drahtloses Kommunikationssystem
Système de communication sans fil

(30) Priority: 10.04.2013 JP 2013082155
(43) Date of publication of application: 15.10.2014
(73) Proprietor: Panasonic Intellectual Property Management Co., Ltd., Osaka-shi, Osaka 540-6207 (JP)
(72) Inventor: Kurita, Masanori, Chuo-ku, Osaka 540-6207 (JP); Hoshiba, Keitaro, Chuo-ku, Osaka 540-6207 (JP)
(74) Representative: Appelt, Christian W.

(56) References cited:
- WO-A1-2006/133598
- JP-A- 2006 343 979
- US-A1- 2008 232 334
- US-A1- 2010 111 050

## Description

### TECHNICAL FIELD

The invention relates generally to wireless communication systems and, more particularly, to a wireless communication system in which a master terminal and slave terminals perform wireless communication in accordance with a time division multiple access protocol.

### BACKGROUND ART

Conventionally, there has been a wireless communication system described in Japanese Patent Application Publication No. 2006-343979 (hereinafter, referred to as "Document 1 "). As one example of the wireless communication system, this Document 1 discloses a fire alarm system that transmits fire sensing information on a wireless signal transmitted from a fire sensor with a wireless signal to a central monitoring board via a repeater. The conventional example described in the Document 1 achieves wireless communication between each of fire sensors and a corresponding repeater in accordance with a Time Division Multiple Access (TDMA) protocol, thereby avoiding collision between wireless signals of the fire sensors.

In this wireless communication system, there is a case where two or more repeaters (master terminals) are located within an overlapped transmission area of their radio waves. In this case, there is a possibility that repeaters cannot receive wireless signals and therefore wireless communication is disabled, when at least part of a period, during which a fire sensor (slave terminal) transmits a wireless signal to a corresponding repeater (master terminal), overlaps a period during which another fire sensor transmits a wireless signal to another corresponding repeater.

Here, regarding a wireless communication standard, a plurality of frequency channels are prepared in general. Accordingly, in each slave terminal and a master terminal, if wireless communication therebetween is disabled due to e.g., change in communication environment, the present frequency channel is automatically changed to another frequency channel (e.g., see the European standard EN54-25). In a conventional method for changing a frequency channel, each of the master and slave terminals executes a predetermined "channel determination procedure" to determine a new (another) frequency channel, and then changes the present frequency channel to the new frequency channel.

However, because communication link is not established between the master terminal and the slave terminal during the channel determination procedure, the slave terminals cannot transmit wireless signals to the master terminal during the procedure. The conventional method therefore has a problem in that, in a case where the fire sensor (slave terminal) detects a fire during the procedure, notification of fire occurrence from the fire sensor (slave terminal) to the repeater (master terminal) is delayed.

Furthermore, the master terminal is required: to change the frequency channel for all of the slave terminals to the same frequency channel in a lump; or to manage plural frequency channels used for each slave terminal. However, the former configuration has a problem in that a slave terminal cannot perform communication with a master terminal if the slave terminal fails to change the frequency channel correctly due to any reasons. Further, the latter configuration has a problem in that the master terminal is required to change a frequency channel for each slave terminal, and needs a complicated processing.

### DISCLOSURE OF THE INVENTION

It is an object of the present invention to provide a wireless communication system, which can reliably and promptly perform a wireless communication even when a communication environment changes.

A wireless communication system according to the invention comprises: a master terminal and slave terminals, which are configured to perform wireless communication with each other in accordance with a time division multiple access protocol. The master terminal comprises: a first transmitter configured to transmit a wireless signal; a first receiver configured to receive a wireless signal; and a first controller configured to control the first transmitter and the first receiver. Each of the slave terminals comprises: a second transmitter configured to transmit a wireless signal; a second receiver configured to receive a wireless signal; and a second controller configured to control the second transmitter and the second receiver. Each of the master and slave terminals is configured to transmit and receive wireless signals on a superframe basis, the superframe being composed of first and following frames, each frame of the superframe consisting of a plurality of time slots. The first frame comprises: a downlink slot, comprising a synchronizing signal, from the master terminal to the slave terminals; and uplink slots, pre-allocated to respective slave terminals, from the slave terminals to the master terminal. The first controller is configured to control the first transmitter to divide the downlink slot into a plurality of transmitting segments with the synchronizing signal contained in a segment signal of each of the transmitting segments and also to sequentially transmit the segment signals of the transmitting segments on respective different frequency channels. A second controller of each of the slave terminals is configured to control a second receiver corresponding to the second controller to receive a segment signal on a variable frequency channel in said different frequency channels.

In one embodiment, a second controller of each of the slave terminals is configured, after successfully receiving the segment signal on the variable frequency channel, to turn off a second receiver corresponding to the second controller until a next frame from a finished time of a transmitting segment of the successfully received segment signal.

In one embodiment, a second controller of each of the slave terminals is configured, after successfully receiving the segment signal on the variable frequency channel, to control a second transmitter corresponding to the second controller to transmit a wireless signal during a pre-allocated uplink slot on a frequency channel corresponding to a transmitting segment of the successfully received segment signal. The first controller is configured to control the first receiver to divide each of the uplink slots into a plurality of receiving segments and also to receive a wireless signal on a variable frequency channel which sequentially varies according to said different frequency channels.

In one embodiment, each of the master and slave terminals comprises a console unit through which an operation instruction is input. Each of the first and second controllers is configured to select frequency channels as said different frequency channels from frequency channel candidates through its own console unit so that unselected frequency channel candidates are not treated as said different frequency channels.

In one embodiment, the first controller stores a master identifier assigned to the master terminal and slave identifiers assigned to respective slave terminals. Each second controller of the slave terminals stores a slave identifier assigned to its own slave terminal and the master identifier. Each of the first and second controllers is configured to select frequency channels as said different frequency channels from frequency channel candidates in accordance with the master identifier so that unselected frequency channel candidates are not treated as said different frequency channels.

In one embodiment, the first controller is allowed to change order of said different frequency channels.

In one embodiment, the first controller is configured to give a priority to a frequency channel corresponding to each of wireless signals successfully received through the first receiver from the slave terminals, and to change said different frequency channels so that a frequency channel with the priority is preceded than a frequency channel without the priority.

In one embodiment, the first controller is configured to control the first transmitter to transmit the segment signal of a first transmitting segment on a specified frequency channel, and allowed to change order of said different frequency channels in transmitting segments following the first transmitting segment.

In one embodiment, the first controller is configured to allow the first transmitter to transmit the segment signals of the transmitting segments in the downlink slot of the first frame and also to allow the first receiver to operate during every uplink slot of the superframe. A second controller of each of the slave terminals is configured, when a second receiver corresponding to the second controller successfully receives a segment signal in the downlink slot of the first frame: to (a) allow a second transmitter corresponding to the second controller to transmit a wireless signal as a response during a pre-allocated uplink slot in the first frame; and (b) turn off the second receiver corresponding to the second controller during downlink slots, of said following frames, except for a slot corresponding to a transmitting segment during which a segment signal has been successfully received.

In one embodiment, a second controller of each of the slave terminals is configured, in each first frame of superframes, to control a second receiver corresponding to the second controller to receive a segment signal on a variable frequency channel in said different frequency channels.

In one embodiment, the first controller is configured to allow the first transmitter to transmit the segment signals of the transmitting segments in the downlink slot of the first frame and also to allow the first receiver to operate during every uplink slot of the superframe. A second controller of each of the slave terminals is configured, when a second receiver corresponding to the second controller successfully receives a segment signal in the downlink slot of the first frame, to allow a second transmitter corresponding to the second controller to transmit a wireless signal as a response during a pre-allocated uplink slot in the first frame. The first controller is configured, during said following frames, to control the first transmitter to transmit a wireless signal on a frequency channel corresponding to an uplink slot in the first frame during which a wireless signal as a response has been successfully received through the first receiver.

Another aspect of a wireless communication system according to the invention comprises a master terminal and slave terminals, which are configured to perform wireless communication with each other in accordance with a time division multiple access protocol. The master terminal comprises: a first transmitter configured to transmit a wireless signal; a first receiver configured to receive a wireless signal; and a first controller configured to control the first transmitter and the first receiver. Each of the slave terminals comprises: a second transmitter configured to transmit a wireless signal; a second receiver configured to receive a wireless signal; and a second controller configured to control the second transmitter and the second receiver. The first controller is configured: to allow the first transmitter to transmit a slot signal containing a synchronizing signal on a specified frequency channel during a downlink slot in a first frame of a superframe composed of the first frame and following frames; and also to control the first receiver to receive wireless signals on the specified frequency channel during uplink slots in the first frame. A second controller of each of the slave terminals is configured, when a second receiver corresponding to the second controller successfully receives the slot signal, to allow a second transmitter corresponding to the second controller to transmit a wireless signal as a response during a pre-allocated uplink slot in the first frame. The first controller is configured, when a wireless signal as a response has not been successfully received from at least one of the slave terminals during uplink slots in the first frame, to control the first transmitter to divide a downlink slot in a second frame in said following frames into a plurality of transmitting segments with the synchronizing signal contained in a segment signal of each of the transmitting segments and also to sequentially transmit the segment signals of the transmitting segments on respective different frequency channels. A second controller of each of the slave terminals is configured, when a slot signal containing a synchronizing signal has not been successfully received from the master terminal in the first frame, to control a second receiver corresponding to the second controller to receive a segment signal on a variable frequency channel in said different frequency channels in the second frame.

In one embodiment, the first controller is configured, when the first controller fails to receive a wireless signal as a response from any of the slave terminals during the uplink slots in the first frame, to divide a downlink slot in the second frame into a plurality of transmitting segments with a wireless signal for requesting a response for a non-responded slave terminal contained in a segment signal of each of the transmitting segments and also to sequentially transmit the segment signals of the transmitting segments on respective different frequency channels. A second controller of each of the slave terminals is configured, when a second receiver corresponding to the second controller has received the wireless signal for requesting the response, to control a second transmitter corresponding to the second controller to transmit a wireless signal as a response during a pre-allocated uplink slot in the second frame on a frequency channel which is different from the specified frequency channel.

In one embodiment, a second controller of each of the slave terminals is configured, when a second receiver corresponding to the second controller has received the wireless signal for requesting the response on more than one frequency channel, to select any one of said more than one frequency channels, and to control a second transmitter corresponding to the second controller to transmit a wireless signal as a response on the selected frequency channel.

In one embodiment, a second controller of each of the slave terminals is configured, when a second receiver corresponding to the second controller has received the wireless signal for requesting the response, to select one frequency channel which has not been used for transmitting the response signal in the present superframe from among a plurality of frequency channels prepared, and to control a second transmitter corresponding to the second controller to transmit a wireless signal as a response on a frequency channel changed by selecting from unselected frequency channels in said different frequency channels.

According to the wireless communication system of the invention, a first controller is configured to control a first transmitter to divide a downlink slot into a plurality of transmitting segments with a synchronizing signal contained in a segment signal of each of the transmitting segments and also to sequentially transmit the segment signals of the transmitting segments on respective different frequency channels, and a second controller of each of slave terminals is configured to control a second receiver corresponding to the second controller to receive a segment signal on a variable frequency channel in the different frequency channels. As a result, it is possible to reliably and promptly perform a wireless communication even when a communication environment changes.

### BRIEF DESCRIPTION OF THE DRAWINGS

Preferred embodiments of the invention will now be described in further details. Other features and advantages of the present invention will become better understood with regard to the following detailed description and accompanying drawings where:
FIG. 1A is a block diagram illustrating a slave terminal (fire sensor) of a wireless communication system according to a first embodiment;
FIG. 1B is a block diagram illustrating a master terminal (repeater) of the wireless communication system according to the first embodiment;
FIG. 1C is a block diagram illustrating a central monitoring board of the wireless communication system according to the first embodiment;
FIG. 2 is a system configuration diagram illustrating the wireless communication system according to the first embodiment;
FIG. 3 is an explanatory diagram of a frame format in the wireless communication system according to the first embodiment;
FIG. 4 is an explanatory diagram of a superframe in the wireless communication system according to the first embodiment;
FIG. 5 is a timing diagram illustrating an operation of the wireless communication system according to the first embodiment;
FIG. 7 is a timing diagram illustrating an operation of the wireless communication system according to the first embodiment;
FIG. 8 is a timing diagram illustrating an operation of the wireless communication system according to the first embodiment;
FIG. 9 is a timing diagram illustrating an operation of the wireless communication system according to the first embodiment;
FIG. 10 is a timing diagram illustrating an operation of the wireless communication system according to the first embodiment;
FIG. 11 is a timing diagram illustrating an operation of the wireless communication system according to a second embodiment; and
FIG. 12 is a timing diagram illustrating an operation of the wireless communication system according to the second embodiment;

### DESCRIPTION OF EMBODIMENTS

Hereinafter, embodiments of a fire alarm system to which technical concepts of the present invention are applied will be explained below in detail, referring to the drawings.

### (First Embodiment)

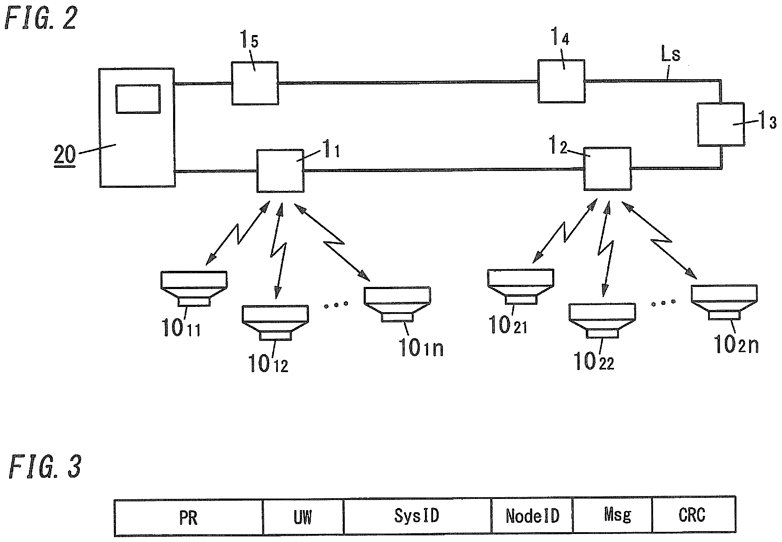

As shown in FIG. 2, a fire alarm system of the present embodiment includes one central monitoring board **20,** a plurality of repeaters **1** (**1₁** to **1₅**) (in the shown example, five repeaters), and a plurality of fire sensors **10** (**10₁₁** to **10₁ₙ**, and **10₂₁** to **10₂ₙ**) (in the shown example, six fire sensors). In the fire alarm system, each of the repeaters **1ᵢ** (i=1, 2, ..., 5) and corresponding fire sensors **10ᵢₖ** (k=1, 2, ..., n) constitute a subsystem (wireless communication system). Each of the repeaters **1ᵢ** (i=1, 2, ..., 5) and corresponding fire sensors **10** (**10ᵢ₁**, to **10ᵢₙ**) are configured to perform wireless communication with each other in accordance with a time division multiple access protocol. That is, in the present embodiment, a repeater **1** corresponds to a master terminal (coordinator), and a fire sensor **10** corresponds to a slave terminal (device). Here, the slave terminal is not limited to the fire sensor **10,** and may be a sensor that senses a gas leak, or intrusion of a person into an area to be monitored, for example.

The plurality of repeaters **1₁** to **1₅** are connected to the central monitoring board **20** via a signal line **Ls** (by multi-drop connection). Data transmission is performed between the central monitoring board **20** and each of the plurality of repeaters **1₁** to **1₅** via the signal line **Ls.**

Each repeater **1ᵢ** (i=1, 2,..., 5) is configured to perform wireless communication, using a radio wave as a medium, with the plurality of fire sensors **10ᵢₖ** that are members of its own (**1ᵢ**) subsystem. That is, when receiving fire sensing information from one of the plurality of fire sensors **10ᵢₖ**, a corresponding repeater **1ᵢ** transmits the received fire sensing information to the central monitoring board **20** via the signal line **Ls.** Then, under control of the central monitoring board **20,** necessary measures are taken (such as issuing an alarm, reporting a place where fire occurs, and reporting the fire to a fire station). In FIG. 2, illustration of fire sensors is omitted, which are members of a subsystem to which each of the repeaters **1₃** to **1₅** belongs. The number of the plurality of repeaters **1** in the present embodiment is one example, and is not limited to five.

For example, in each of the subsystem, a repeater **1** and corresponding fire sensors **10** communicate with each other through one of three frequency bands defined in IEEE802.15.4 standard, i.e., through 868MHz band, 910MHz band or 2.4GHz band.

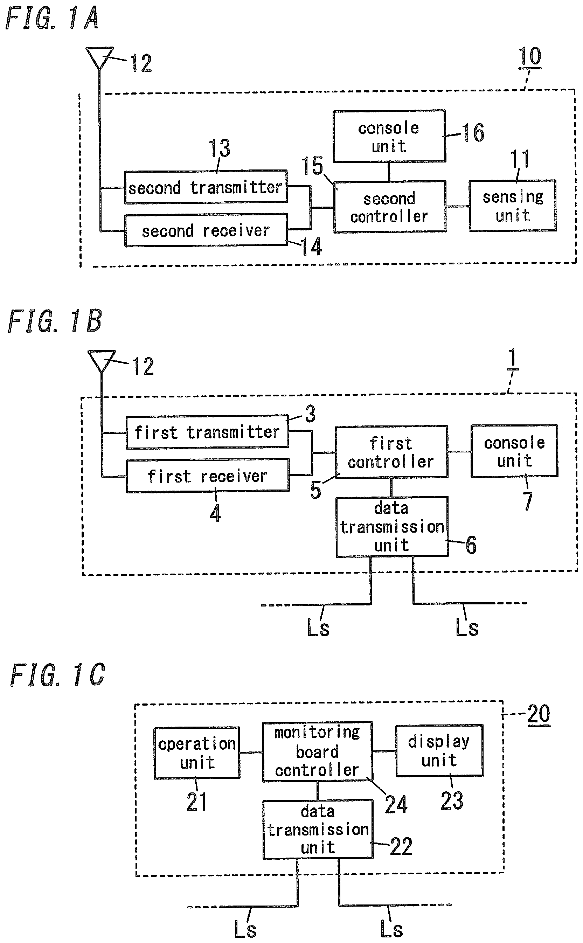

Each fire sensor **10** is installed on a ceiling of a facility for example, and, as shown in FIG. 1A, includes a sensing unit **11,** an antenna **12,** a second transmitter (slave transmitter; second wireless transmitter) **13,** a second receiver (slave receiver; second wireless receiver) **14,** a second controller (slave controller) **15,** and the like. The sensing unit **11** is configured to detect, for example, smoke generated by fire, thereby sensing the fire.

The second transmitter **13** is configured to modulate a carrier wave having a specified frequency in accordance with a signal of transmission data, and transmit the modulated signal as a wireless signal via the antenna **12,** using a radio wave as a medium. The second receiver **14** is configured to demodulate a wireless signal that is received via the antenna **12** to extract the transmission data to output to the second controller **15.** The second controller **15** includes, as a main component, a microcomputer and a non-volatile memory, such as EEPROM (Electrically Erasable Programmable Read-Only Memory) or the like. The second controller **15** is configured to execute programs stored in the non-volatile memory to perform various processing described later.

Each of the second transmitter **13** and second receiver **14** is configured to be capable of changing a frequency of the carrier wave (that is, a frequency channel) to any one of a plurality of frequency channels prepared. For example, sixteen frequency channels are prepared for 2.4GHz band in the IEEE802.15.4 standard. The channel change is performed under control of the second controller **15.** Because a method of changing a frequency channel of each of the second transmitter **13** and second receiver **14** is conventionally well-known, the detail thereof is omitted.

As shown in FIG. 1B, each repeater **1** includes an antenna **2,** a first transmitter (master transmitter; first wireless transmitter) **3,** a first receiver (master receiver; first wireless receiver) **4,** a first controller (master controller) **5,** a data transmission unit **6,** and the like. The first transmitter **3** is configured to modulate a carrier wave having a specified frequency in accordance with a signal of transmission data, and transmit the modulated signal as a wireless signal via the antenna **2,** using a radio wave as a medium. The first receiver **4** is configured to demodulate a wireless signal that is received via the antenna **2** to extract the transmission data to output to the first controller **5.** The data transmission unit **6** is configured to transmit a transmission signal to the central monitoring board **20** and receive a transmission signal from the board **20,** via the signal line **Ls.** The transmission signals are providing a pulse width modulation on a direct current voltage having bipolarity, which is applied between two lines of the signal line **Ls.** The first controller **5** includes, as a main component, a microcomputer and a non-volatile memory, such as EEPROM or the like. The first controller **5** is configured to execute programs stored in the non-volatile memory to perform various processing described later.

Each of the first transmitter **3** and first receiver **4** is configured to be capable of changing the present frequency channel to any one of the above-mentioned plurality of frequency channels. The channel change is performed under control of the first controller **5.** Because a method of changing a frequency channel of the first transmitter **3** and the first receiver **4** is conventionally well-known, the detail thereof is omitted.

In order to specify a transmission source and a transmission destination in the wireless communication, each repeater **1** is assigned with an identifier (master identifier), and each fire sensor **10** is assigned with an identifier (slave identifier). Each master identifier includes a system code for identifying an individual subsystem. Each slave identifier includes a system code for identifying an individual subsystem and a sensor number for specifying fire sensors **10** belonging to the same subsystem. The first controller **5** of the repeater **1** stores a master identifier assigned to the repeater **1** and slave identifiers assigned to respective fire sensors **10** in a subsystem to which the repeater **1** belongs. A second controller **15** of each of the fire sensors **10** stores a slave identifier assigned to its own fire sensor **10** and a master identifier assigned to a repeater **1** in a subsystem to which the fire sensor **10** belongs.

The central monitoring board **20** is installed in a control room or the like of the facility, and, as shown in FIG. 1C, includes an operation unit **21,** a data transmission unit **22,** a display unit **23,** a monitoring board controller **24,** and the like. The operation unit **21** is configured to monitor operation states of various switches, and output an operation signal to the monitoring board controller **24** when a switch is operated. The data transmission unit **22** is configured to transmit a transmission signal to the data transmission unit **6** of each repeater **1** and receive a transmission signal from the unit **6,** via the signal line **Ls,** as described above. The display unit **23** includes a display device, such as a liquid crystal display or an organic EL display, and a drive circuit that drives the display device under control of the monitoring board controller **24.** The monitoring board controller **24** includes, as a main component, a microcomputer and a non-volatile memory, such as EEPROM or the like. The monitoring board controller **24** is configured to execute programs stored in the non-volatile memory to perform various processing described later.

FIG. 3 shows a frame format of a frame transmitted and received between a repeater **1** and each of corresponding fire sensors **10.** The frame format includes a preamble **PR,** a unique word **UW,** a system code **SysID,** a sensor number **NodelD**, a message **Msg,** and an error detection code **CRC.** The preamble **PR** is defined as, for example, a bit sequence of 32 bits in which "1" and "0" are arranged alternately. Each of the first receiver **4** and second receiver **14** is configured to establish bit synchronization of a received wireless signal based on the preamble **PR,** and further establish frame synchronization based on the unique word **UW.**

When a repeater **1** transmits a message to a specific fire sensor **10** in a subsystem to which the repeater **1** belongs, the first controller **5** stores a sensor number of the specific fire sensor **10** in an area of the sensor number **NodelD**. When a repeater **1** transmits a message to all fire sensors **10** in a subsystem to which the repeater **1** belongs (broadcast transmission or multicast transmission), the first controller **5** stores a specific number (e.g., "00"), which is not assigned to any of the fire sensors **10,** in the area of the sensor number **NodelD**. On the other hand, when a fire sensor **10** transmits a wireless signal to a repeater **1** in a subsystem to which the fire sensor **10** belongs, the second controller **15** simply stores its own sensor number in the area of the sensor number **NodelD**.

In the fire sensor **10,** when receiving a wireless signal, the second receiver **14** amplifies and demodulates the received signal to extract the data to output to the second controller **15.** The second controller **15** then samples the data demodulated by the second receiver **14,** through a digital input port provided in the microcomputer. The second controller **15** then establishes the bit synchronization based on the preamble **PR,** and then establishes the frame synchronization based on the unique word **UW,** and then acquires data (identifier) stored in each of areas of the system code **SysID** and sensor number **NodelD**. Here, if the acquired identifier does not agree with its own identifier, the second controller **15** discards the demodulated data. If the acquired identifier agrees with its own identifier and no bit error is detected, the second controller **15** acquires data (message) stored in an area of the message **Msg.** Also, if the acquired identifier agrees with the code corresponding to the broadcast transmission or multicast transmission, the second controller **15** acquires the data (message) stored in the area of the message **Msg** without discarding it.

Similarly, in each repeater **1,** when receiving a wireless signal, the first receiver **4** amplifies and demodulates the received signal to extract the data to output to the first controller **5.** The first controller **5** then samples the data demodulated by the first receiver **4,** through a digital input port provided in the microcomputer. The first controller **5** then establishes the bit synchronization based on the preamble **PR,** and then establishes the frame synchronization based on the unique word **UW,** and then acquires data (identifier) stored in the area of the system code **SysID.** Here, if the acquired identifier does not agree with its own identifier, the first controller **5** discards the demodulated data. If the acquired identifier agrees with its own identifier and no bit error is detected, the first controller **5** acquires data (message) stored in the area of the message **Msg.** Also, if the acquired identifier agrees with a code (identifier) corresponding to the broadcast transmission or multicast transmission, the first controller **5** acquire the data (message) stored in the area of the message **Msg** without discarding it.

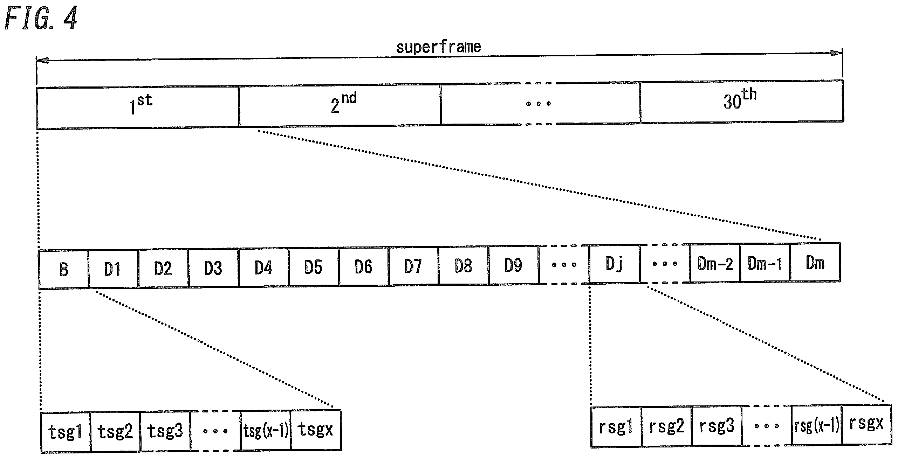

In each subsystem, one repeater **1ᵢ** and a plurality of fire sensors **10ᵢₗ** to **10ᵢₙ** perform wireless communication with each other in accordance with a time division multiple access (TDMA) protocol. In the present embodiment, as shown in FIG. 4, one frame is composed of: one downlink slot (downlink time slot) **B** (from a repeater **1ᵢ** to fire sensors **10ᵢₖ**); and a plurality of uplink slots (uplink time slots) **D₁** to **Dₘ** (from the fire sensors **10ᵢₖ** to the repeater **1ᵢ**). In the frame, the uplink slots **D₁** to **Dₘ** are pre-allocated to respective sensors **10ᵢ₁** to **10ᵢₙ.** Therefore, it is possible to avoid collision between wireless signals transmitted from the plurality of fire sensors **10ᵢ₁** to **10ᵢₙ.**

As shown in FIG. 4, the first frame **1^{st}** includes the downlink slot **B** and the first to mth uplink slots **D₁** to **Dₘ.** Similarly, each of the frames **1^{st}** to **30^{th}** includes a downlink slot **B** and first to mth uplink slots **D₁** to **Dₘ.** For example, each of the downlink slots **B** is allocated to the repeater **1,** and the first to nth uplink slots **D₁** to **Dn** ("n" is equal to or smaller than "m") are allocated to respective fire sensors **10ᵢ₁,** to **10ᵢₙ.** The remaining uplink slots ((n+1)th to mth uplink slots) may be blank slots not allocated to any fire sensors **10,** or may be allocated to respective fire sensors **10ᵢ₁**, to **10ᵢₙ** again.

Here, in each subsystem, it is required to periodically check whether the plurality of fire sensors **10** is operating normally. Accordingly, each repeater **1** is configured to periodically transmit a transmission request message to fire sensors **10** in its own subsystem (broadcast transmission), and also to receive a response message from each of the fire sensors **10** (hereinafter, referred to as "periodic monitoring"). That is, if a repeater 1 receives no response message in any time slot of the plurality of uplink slots, it is possible to determine that a malfunction, such as a dead battery, occurs in a fire sensor **10** to which the uplink slot is allocated. A second controller **15** of each fire sensor **10** determines a timing of a time slot by controlling a built-in timer based on a timing of receiving the transmission request message. That is, the second controller **15** is configured to regard a wireless signal containing the transmission request message as a synchronizing signal (beacon) to determine the time slots according to the Time Division Multiple Access protocol. For this reason, hereinafter, the wireless signal containing the transmission request message is referred to as the "synchronizing signal".

FIG. 4 shows a superframe that is composed of a first frame (starting frame) **1^{st}** for transmitting the synchronizing signal and following frames (second to last frames) **2^{nd}** to **30^{th}**. Messages except for the transmission request message are transmitted and received through the following frames **2^{nd}** to **30^{th}**. The plurality of uplink slots **D₁** to **Dₘ** may be individually allocated to fire sensors **10**, through for example dip switches installed in the fire sensors **10,** respectively. Alternatively, in a process of manufacturing a fire sensor **10,** allocation information may be previously stored in the non-volatile memories of the second controllers **15.** Alternatively, when the fire sensors **10** are installed in the facility, a corresponding repeater **1** may sequentially allocate the plurality of time slots to the fire sensors **10** and make the non-volatile memories of the second controllers **15** store the allocation information, by wireless communication. In the present embodiment, one superframe is composed of 30 frames, but the number of frames in one superframe is not limited to 30.

In the present embodiment, when construction work is carried out, one frequency channel is selected, on which wireless communication can be performed between a repeater **1** and each fire sensor **10.** The repeater **1** performs the wireless communication with each fire sensor **10** on the selected frequency channel. However, after operation of the wireless communication system is started, a part of the fire sensors **10** may become incapable of performing the wireless communication with the repeater **1** on the frequency channel that has been selected in the construction work, due to deterioration of a communication environment.

So, when continuously failing reception of the synchronizing signal twice or more, a second controller **15** of each of the fire sensors **10** changes the present frequency channel of the second receiver **14.** On the other hand, when continuously failing reception of the response message from any of the fire sensors **10** twice or more, the first controller **5** of the repeater **1** determines that the fire sensor **10** has changed the frequency channel, and performs the following channel search processing.

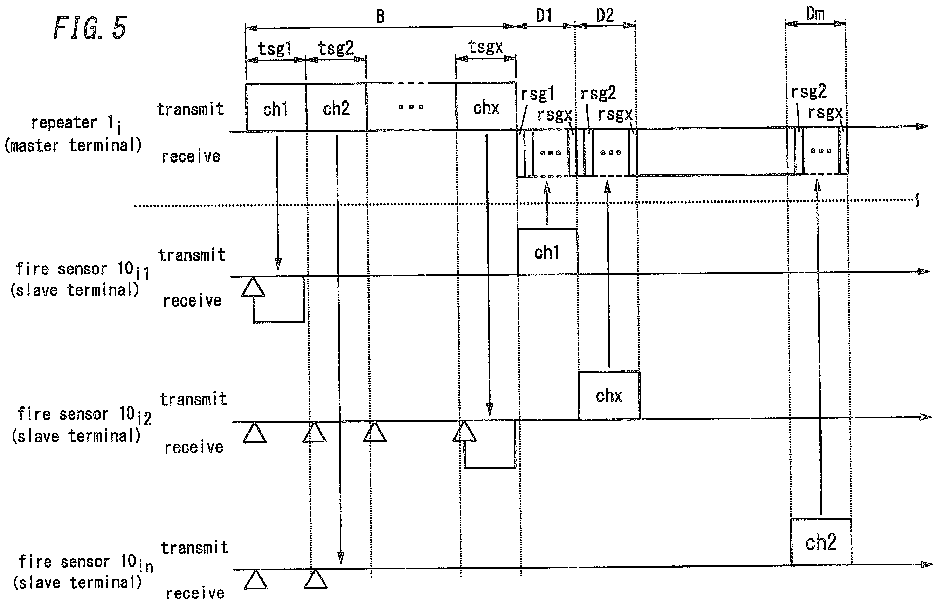

The channel search processing performed by a first controller **5** is explained below. First, as shown in FIGS. 4 and 5, a first controller **5** of a repeater **1ᵢ** divides (time-divides) the downlink slot **B** in the first frame **1^{st}** into a plurality of transmitting segments **tsg1** to **tsgx,** and controls the first transmitter **3** to transmit a synchronizing signal on a different frequency channel for each of the transmitting segments **tsg1** to **tsgx.** Hereinafter, reference signs (channel numbers) **"ch1"** to **"chx"** are assigned to respective different frequency channels in order to distinguish the different frequency channels from each other.

In an example shown in FIG. 5, the first controller **5** of the repeater **1ᵢ** divides the downlink slot **B** in the first frame **1^{st}** into "x" of transmitting segments **tsg1** to **tsgx.** Then, the first controller **5** controls the first transmitter **3** to transmit a synchronizing signal: on a frequency channel **ch1** in the transmitting segment **tsg1;** on a frequency channel **ch2** in the transmitting segment **tsg2;** ...; and on a frequency channel **chx** in the transmitting segment **tsgx.**

The second controller **15,** which has changed the frequency channel, controls the second receiver **14** to perform intermittent reception in synchronization with a timing at which a corresponding transmitting segment starts to receive the synchronizing signal. For example, as shown in FIG. 5, a fire sensor **10ᵢ₁** that selects a frequency channel **ch1** can receive the synchronizing signal in the first transmitting segment **tsg1**, a fire sensor **10ᵢ₁** that selects a frequency channel **ch2** can receive the synchronizing signal in the second transmitting segment **tsg2,** and the like. Here, when successfully receiving a synchronizing signal, a second controller **15** of each of the fire sensors **10ᵢ₁,** to **10ᵢₙ** turns off its own second receiver **14.** Accordingly, batteries of the fire sensors **10ᵢ₁** to **10ᵢₙ** can be saved.

When receiving the synchronizing signal, a second controller **15** of each of the fire sensors **10ᵢ₁** to **10ᵢₙ** controls its own transmitter **13** to transmit a wireless signal containing the response message during an allocated uplink slot on the frequency channel which is currently selected.

Describing the above operation in other words, the first controller **5** controls the first transmitter **3** to divide the downlink slot **B** into a plurality of transmitting segments **tsg1** to **tsgx** with a synchronizing signal contained in a segment signal of each of the transmitting segments **tsg1** to **tsgx,** and to sequentially transmit the segment signals of the transmitting segments **tsg1** to **tsgx** on respective different frequency channels **ch1** to **chx.** Note that "a segment signal" is a wireless signal transmitted during each of the transmitting segments **tsg1** to **tsgx** in the downlink slot **B.** In the first frame **1^{st}**, each segment signal contains a synchronizing signal, and respective segment signals of the transmitting segments are transmitted on the different frequency channels **ch1** to **chx.**

On the other hand, the second controller **15** controls the second second receiver **14** so as to receive a segment signal on a (one) variable frequency channel selected from the different frequency channels **ch1** to **chx.**

The second controller **15** also controls, after successfully receiving the segment signal on the variable frequency channel selected from the different frequency channels **ch1** to **chx,** the second transmitter **13** to transmit a wireless signal during an allocated uplink slot on the frequency channel corresponding to a transmitting segment of the successfully received segment signal. That is, the second controller **15** controls the second transmitter **13** to transmit a wireless signal as a response on a frequency channel which is the same as the frequency channel on which the second receiver **14** has successfully received a segment signal containing a synchronizing signal.

As described above, in the present embodiment, the repeater **1** transmits synchronizing signals on the different frequency channels in the downlink slot **B** of the first frame **1^{st}**. As a result, it is possible, even when a fire sensor **10** automatically changes the frequency channel, to reliably and promptly perform a wireless communication between the repeater **1** and the fire sensor **10.**

Note that the repeater (master terminal) **1** sequentially transmits the segment signals (the synchronizing signals) of the transmitting segments **tsg1** to **tsgx** in the downlink slot **B** on the different frequency channels **ch1** to **chx.** Therefore, a start time of each of second to last transmitting segments **tsg2** to tsgx does not coincide with a start time of the downlink slot **B.** In view of this point, it is preferable that each of the segment signals contains "order information" which indicates its own position in a downlink slot. Each of the fire sensors **10** can obtain the start time of the downlink slot **B** based on: the timing when the second receiver **14** receives the segment signal and the order information contained in the segment signal.

In another embodiment, in a case where a fire sensor **10** has once established synchronization with the repeater **1** and then failed reception of a synchronization signal, a second controller **15** of the fire sensor **10** controls a second receiver **14** so as to receive a segment signal on a variable frequency channel which sequentially varies according to the different frequency channel **ch1** to **chx.** In detail, the second controller **15** controls the second receiver **14** to sequentially change the frequency channel of the second receiver **14** in synchronization with respective start times of the transmitting segments. In this configuration, because the fire sensor **10** sequentially change the frequency channel for receiving a wireless signal, it is possible to reliably and promptly perform a wireless communication between the repeater **1** and the fire sensor **10** even when the communication environment changes. Here, when receiving a segment signal containing a synchronizing signal in any of the transmitting segments, the second controller **15** turns off the second receiver **14,** thereby saving the battery.

In summary, the second controller **15** of the fire sensor (the slave terminal) **10** is configured to control the second receiver **14** to receive a segment signal on a variable frequency channel in the different frequency channels **ch1** to **chx.** According to this configuration, it is possible to reliably and promptly perform a wireless communication between the repeater **1** and each of the fire sensors **10** even when the communication environment changes.

After transmitting the segment signals of the transmitting segments **tsg1** to **tsgx** in the downlink slot **B** on the different frequency channels **ch1** to **chx,** the first controller **5** divides (time-divides) each of the plurality of uplink slots **D₁**, **D₂**, ... in the first frame **1^{st}** into a plurality of receiving segments **rsg1** to **rsgx,** as shown in FIGS. 4 and 5, and controls the first receiver **4** to receive a wireless signal on a different frequency channel for each of the plurality of receiving segments **rsg1** to **rsgx.** In other words, the first controller **5** is configured to control the first receiver 4 to divide each of the uplink slots **D₁** to **Dₘ** into a plurality of receiving segments **rsg1** to **rsgx** and also to receive a wireless signal on a variable frequency channel which sequentially varies according to the different frequency channels **ch1** to **chx.** On the other hand, each of the second controller **15** controls its own second transmitter **13** to divide an allocated uplink slot into a plurality of segments so as to correspond respectively to the receiving segments **rsg1** to **rsgx,** and to sequentially transmit wireless signals during the segments on the frequency channel corresponding to the transmitting segment of the successfully received segment signal. Therefore, in each uplink slot allocated to a fire sensor **10,** the first receiver **4** of the repeater **1** can receive a wireless signal containing a response message during a receiving segment corresponding to a frequency channel selected by the fire sensor **10.**

For example, as shown in FIG. 5, it is assumed that a fire sensor **10ᵢ₁**, to which the first uplink slot **D₁** is allocated, transmits a wireless signal on a frequency channel **ch1** and a fire sensor **10ᵢ₂**, to which the second uplink slot **D₂** is allocated, transmits a wireless signal on a frequency channel **chx.** In this case, a first receiver **4** of a repeater **1ᵢ** receives the wireless signal transmitted from the fire sensor **10ᵢ₁** on the frequency channel **ch1**, during the first receiving segment **rsg1** in the first time slot **D₁**. Then, the first receiver **4** of the repeater **1ᵢ** receives the wireless signal transmitted from the fire sensor **10ᵢ₂** on the frequency channel **chx,** during the xth receiving segment **rsgx** in the second time slot **D₂**.

According to this configuration, the first controller **5** divides (time-divides) each uplink slot into a plurality of receiving segments **rsg1** to **rsgx,** and controls the first receiver **4** to receive a wireless signal on a different channel for each of the plurality of receiving segments **rsg1** to **rsgx.** As a result, the repeater **1** can reliably receive wireless signals transmitted from the respective fire sensors **10** on various frequency channels.

Note that each of the repeater **1** and fire sensors **10** may be configured to select "changeable frequency channels" from a plurality of frequency channels prepared (i.e., from frequency channel candidates) so that unselected frequency channel candidates are not used for transmitting and receiving a wireless signal.

For example, each of the repeater **1** and fire sensors **10** includes a console unit **(7** or **16)** such as dip switches, and selects changeable frequency channels according to an operation instruction input through the console unit **(7** or **16).** In other words, each of the repeater **1** and fire sensors **10** includes a console unit **(7** or **16)** through which an operation instruction is input, and each of the first and second controllers **5** and **15** is configured to select "changeable frequency channels" as the different frequency channels from frequency channel candidates through its own console unit **(7** or **16)** so that unselected frequency channel candidates are not treated as the different frequency channels. For example, in a case where eight of frequency channels (frequency channel candidates) **ch1** to **ch8** are prepared, each of the repeater **1** and fire sensors **10** may select five frequency channels (e.g., **ch1** to **ch5**) according to an operation instruction from among the eight frequency channel candidates **ch1** to **ch8.** Each of the repeater **1** and fire sensors **10** changes the present channel to one of the selected five frequency channels (in this case, **ch1** to **ch5**), and does not changes the present channel to the remaining three frequency channels (in this case, **ch6** to **ch8**).

Alternatively, each of the first and second controllers **5** and **15** may be configured to select the "changeable frequency channels" according to the master identifier of the repeater **1.** In other words, each of the first and second controllers 5 and **15** is configured to select the changeable frequency channels as the different frequency channels from frequency channel candidates in accordance with the master identifier so that unselected frequency channel candidates are not treated as the different frequency channels. For example, each of the repeater **1** and fire sensors **10** may be configured to select the changeable frequency channels based on a random-number generation formula commonly stored in each of the first and second controllers **5** and **15,** with using the identifier of the of the repeater **1** as a seed.

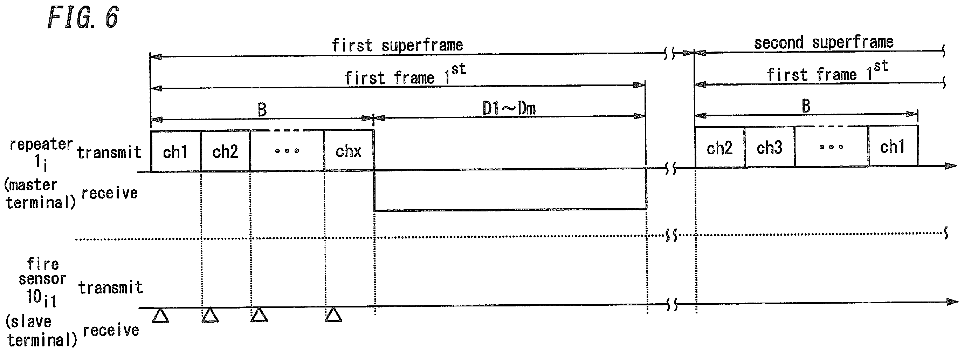

In one embodiment, the first controller **5** is allowed to change the order of the different frequency channels in the downlink slot **B.** For example, as shown in FIG. 6, a first controller **5** of a repeater **1ᵢ** transmits, in the downlink slot **B** in the first frame **1^{st}** of the first superframe, the segment signals of the transmitting segments while sequentially changing the frequency channels in the order of **ch1, ch2,** ..., **chx.** In the downlink slot **B** in the first frame **1^{st}** of the next (second) superframe, the first controller **5** rearranges the order of the frequency channels so that the frequency channels start from a frequency channel **ch2** corresponding to the second transmitting segment in the downlink slot **B** in the first frame **1^{st}** of the first superframe. Alternatively, in the downlink slot **B** in the first frame **1^{st}** of the next (second) superframe, the first controller **5** rearranges the order of the frequency channels randomly. According to this configuration, it is possible to avoid collision of wireless signals belonging to different subsystems, even when the repeaters **1** belonging to the different subsystems start to transmit simultaneously wireless signals in the first frames **1^{st}**.

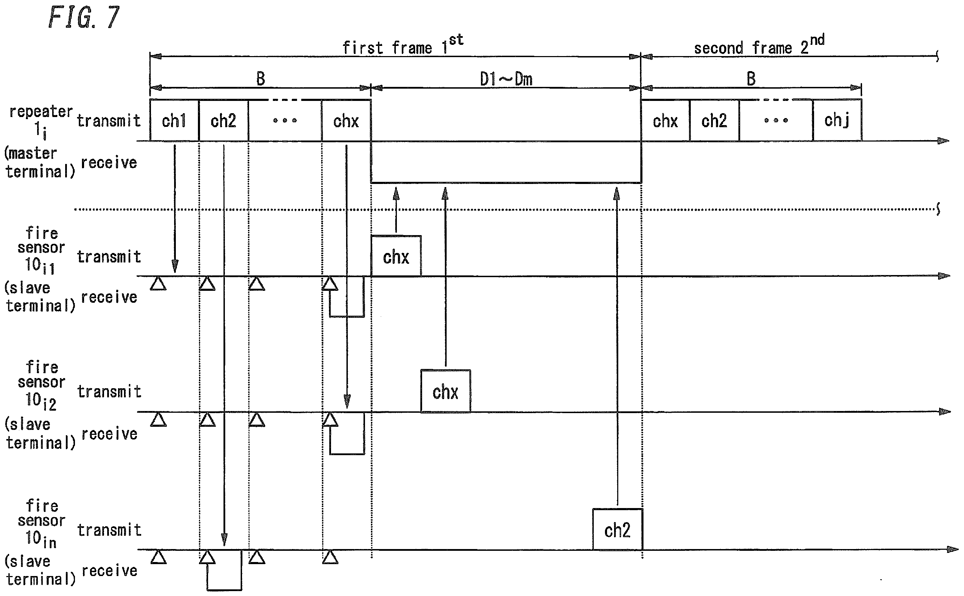

In another embodiment, the first controller **5** is configured to give a priority to a frequency channel corresponding to each of wireless signals successfully received through the first receiver **4** from the fire sensors **10,** and to change the order of the different frequency channels so that a frequency channel with the priority is prioritized than a frequency channel without the priority. In detail, the first controller **5** gives a priority to a frequency channel on which the receive **4** successfully received a wireless signal containing a response message. And then, the first controller **5** changes the order of the frequency channels in the following downlink slots **B** so that a frequency channel with the priority is preceded than a frequency channel without the priority. In an example of FIG 7, a first controller **5** of a repeater **1ᵢ** gives a first-order priority to a frequency channel **chx** corresponding to wireless signals successfully received from two or more (two, in the shown example) fire sensors **10ᵢ₁** and **10ᵢ₂**. The first controller **5** also gives a second-order priority to a frequency channel **ch2** corresponding to a wireless signal successfully received from one fire sensor **10ᵢₙ.** The first controller **5** then change the order of the frequency channels so that a frequency channel with the higher priority is preceded than a frequency channel with the lower priority as well as a frequency channel with the lower priority is preceded than a frequency channel without the priority. According to this configuration, each of the fire sensors **10** can receive, in the following downlink slots **B,** a wireless signal in a relatively earlier transmitting segment. As a result, batteries of the fire sensors **10** can be saved.

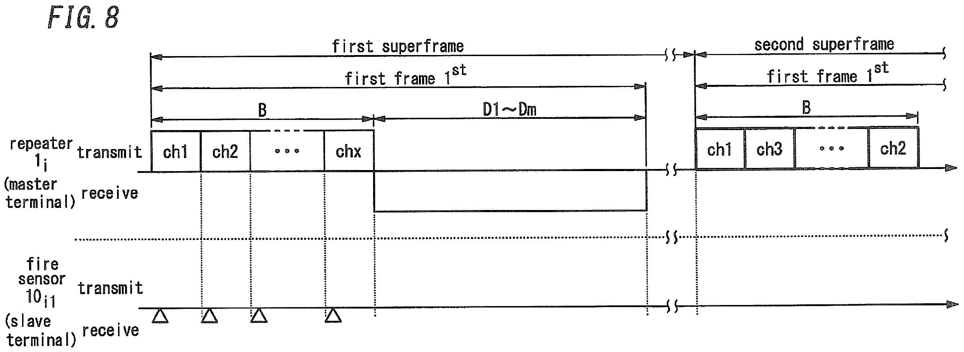

In yet another embodiment, the first controller **5** controls the first transmitter **3** to transmit the segment signal of a first transmitting segment **tsg1** on a specified frequency channel, and allowed to change the order of the different frequency channels in transmitting segments **tsg2** to **tsgx** following the first transmitting segment **tsg1**. In detail, in a downlink slot **B** in a first frame **1^{st}** of each superframe, the first controller **5** controls the first transmitter **3** to transmits the segment signal containing a synchronizing signal of a first transmitting segment **tsg1** on a specified frequency channel, and allowed to change the order of the frequency channels in the following transmitting segments **tsg2** to **tsgx.** For example, in a case where a first controller **5** of a repeater **1ᵢ** sets "a frequency channel **ch1**" to the "specified frequency channel" on which the segment signal of the first transmitting segment **tsg1** is transmitted as shown in FIG. 8, it is possible to promote the fire sensors **10** to use the frequency channel **ch1**. As a result, each of the fire sensors **10** is likely to use the same frequency channel for transmitting and receiving a wireless signal.

Incidentally, it is preferable that the second controller **15** turns off the second receiver **14** during downlink slots **B,** of the following frames (second to last frames), except for a slot (a segment) corresponding to a transmitting segment during which a segment signal has been successfully received in the first frame **1^{st}**.

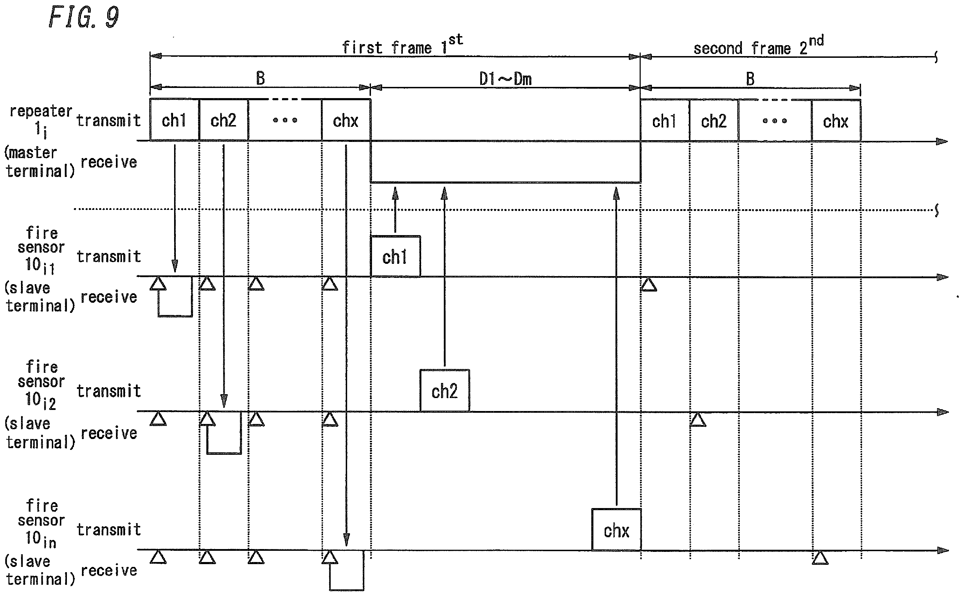

Operations of the repeater **1** and the fire sensors **10** in this configuration will be described with referring FIG. 9.

A first controller **5** of a repeater **1ᵢ** controls the first transmitter **3** to transmit the segment signals of the transmitting segments **tsg1** to **tsgx** in the downlink slot **B** of the first frame **1^{st}** on respective different frequency channels **ch1** to **chx.**

Then, each of fire sensors **10ᵢ₁** to **10ᵢₙ** receives a segment signal on any one of the different frequency channels **ch1** to **chx** in the downlink slot **B** of the first frame **1^{st}**. In the example shown in FIG. 9, a fire sensor **10ᵢ₁** receives a segment signal on a channel **ch1**, a fire sensor **10ᵢ₂** receives a segment signal on a channel **ch2,** and a fire sensor **10ᵢₙ** receives a segment signal on a channel **chx.**

Each of the fire sensors **10ᵢ₁** to **10ᵢₙ** then transmit a wireless signal as a response during an allocated uplink slot in the first frame **1^{st}** on a frequency channel corresponding to a transmitting segment of the successfully received segment signal. In the example shown in FIG. 9, the fire sensor **10ᵢ₁** transmits a wireless signal as a response on the frequency channel **ch1**, the fire sensor **10ᵢ₂** transmits a wireless signal as a response on the frequency channel **ch2,** and the fire sensor **10ᵢₙ** transmits a wireless signal as a response on the frequency channel **chx.**

Then, in the following frames (such as the second frame **2^{nd}** each of the fire sensors **10ᵢ₁** to **10ᵢₙ** turns off its own second receiver **14** except for a slot (segment) corresponding to a transmitting segment during which a segment signal has been successfully received. In detail, as shown in FIG. 9, the fire sensor **10ᵢ₁** turns on its own second receiver **14** only during a period (segment) corresponding to the frequency channel **ch1** in the downlink slot **B** of the second frame **2^{nd}**, the fire sensor **10ᵢ₂** turns on its own second receiver **14** only during a period (segment) corresponding to the frequency channel **ch2** in the downlink slot **B** of the second frame **2^{nd}**, and the fire sensor **10ᵢₙ** turns on its own second receiver **14** only during a period (segment) corresponding to the frequency channel **chx** in the downlink slot **B** of the second frame **2^{nd}**.

According to this configuration, it is possible that each of the fire sensors **10** reliably receives a wireless signal from the repeater **1,** as well as battery of each fire sensor **10** can be saved because the fire sensor **10** turns on its own second receiver **14** only a duration required to receive a wireless signal.

Note that, in each first frame **1^{st}** during which a synchronizing signal is transmitted, each of the second controllers **15** preferably controls, in synchronization with transmitting segments, its own second receiver **14** so as to receive a synchronizing signal on a frequency channel corresponding to each of the transmitting segments. In detail, it is preferable that each of the second controllers **15** controls, in each first frame **1^{st}** of superframes, its own second receiver **14** to receive a segment signal on a variable frequency channel in the different frequency channels. According to this configuration, each of the fire sensors **10** can reliably receive a synchronizing signal in each superframe.

In addition, it is preferable that the first controller **5** controls, during the following frames (the second to last frames) in a superframe, the first transmitter **3** to transmit a wireless signal only on a frequency channel corresponding to an uplink slot in the first frame **1^{st}** during which a wireless signal as a response has been successfully received through the first receiver **4.**

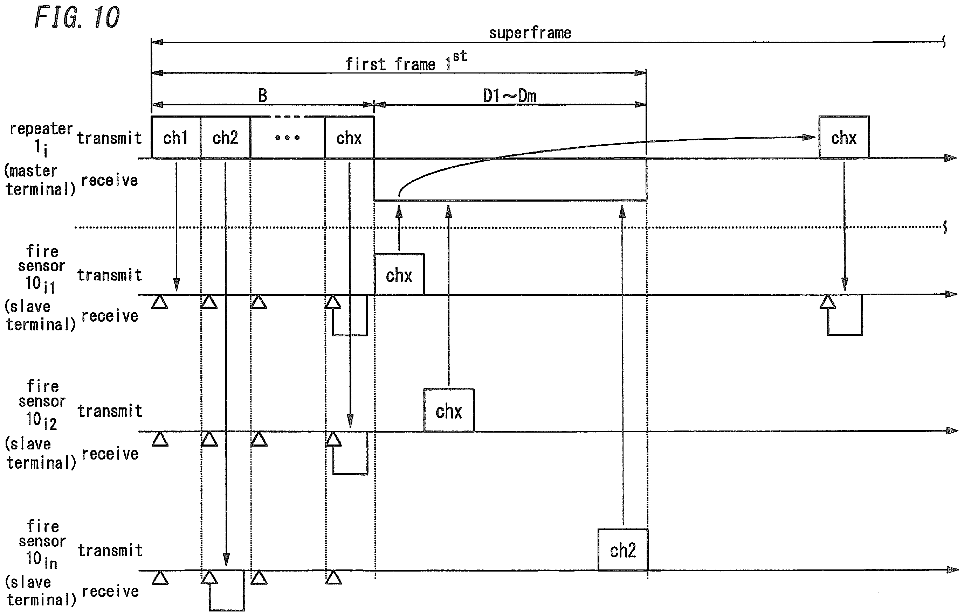

For example, as shown in FIG. 10, when a repeater **1ᵢ** receives a wireless signal from a fire sensor **10ᵢ₁** on a frequency channel **chx** during a first uplink slot **D₁** in the first frame **1^{st}**, the repeater **1i** transmits a wireless signal only on the frequency channel **chx** on which the wireless signal from the fire sensor **10ᵢ₁** has been successfully received during the first frame **1^{st}.** In addition, it is preferable that, when the repeater **1ᵢ** receives wireless signals from fire sensors **10ᵢ₁**, **10ᵢ₂** and **10ᵢ₃** on frequency channels **chx, chx** and **ch2** during uplink slots **D₁, D₂** and **Dₘ** in the first frame **1^{st}**, the repeater **1i** transmits wireless signals only on the frequency channels **chx** and **ch2** on which wireless signals has been successfully received during the first frame **1^{st}**, and does not transmit a wireless signal on the frequency channel **ch1** on which no wireless signal has been received during the first frame **1^{st}** from fire sensors **10ᵢ₁**, **10ᵢ₂** and **10ᵢ₃**.

According to this configuration, the repeater **1** does not transmit a wireless signal on unnecessary frequency channel. Therefore, it is possible to reduce a disturbing wave that disturbs another subsystem, and also reduce power consumption.

### (Second Embodiment)

A wireless communication system according to the present embodiment will be described. The wireless communication system of the present embodiment has substantially the same configuration with the first embodiment except for operations of a repeater 1 and fire sensors **10.** Therefore, like kind elements are assigned the same reference numerals as depicted in the first embodiment, and are not explained in detail.

Incidentally, in a case where a communication environment is kept good after operation of a wireless communication system is started, each of fire sensors **10** can performs wireless communication with a repeater **1** on the frequency channel that has been selected in the construction work. So, performing the channel search processing by a first controller **5** of the repeater **1** in such the situation causes an unnecessary load on the first controller **5,** and may exert a bad influence on a communication environment of another subsystem.

In view of this point, in the present embodiment, the repeater **1** transmits a wireless signal containing a synchronizing signal on a specified frequency channel (for example, a default frequency channel set at a construction work) in a first frame **1^{st}** of each superframe. When receiving wireless signals as responses from all of the fire sensors **10** in uplink slots **D₁** to **Dₘ** in the first frame **1^{st}**, the first controller **5** does not perform the channel search processing. When the first controller **5** fails to receive a wireless signal as a response from at least one of the fire sensors **10,** the first controller **5** performs the channel search processing.

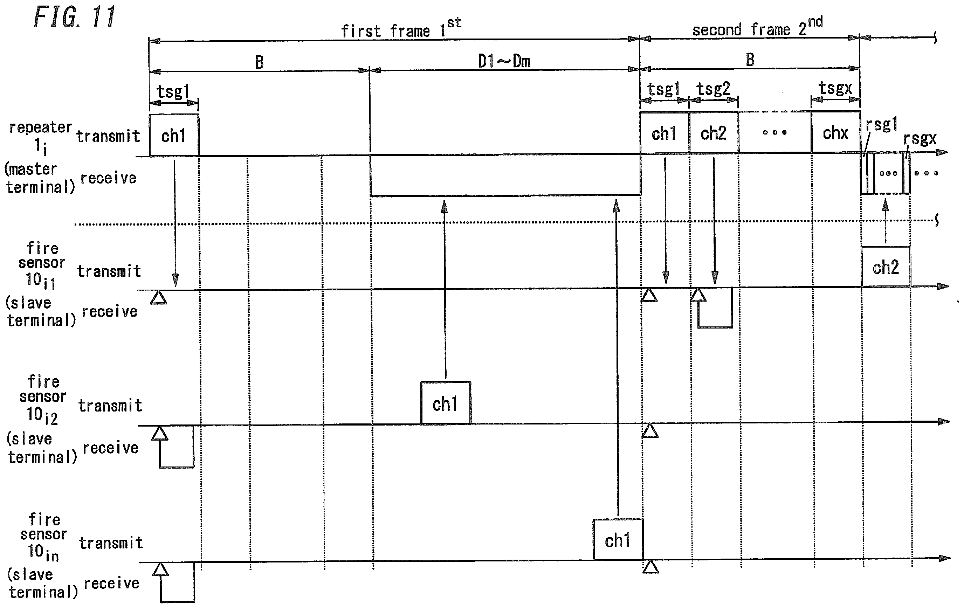

For example, as shown in FIG. 11, a first controller **5** of a repeater **1ᵢ** controls a first transmitter **3** to transmit a slot signal containing a synchronizing signal only on a channel **ch1** during a downlink slot **B** of a first frame **1^{st}**. Note that a slot signal is a wireless signal transmitted during each time slot. In the example shown in FIG. 11, the repeater **1ᵢ** divides the downlink slot **B** of the first frame **1^{st}** into a plurality of transmitting segments, and transmits a segment signal (as the slot signal) containing a synchronizing signal of a first transmitting segment **tsg1** on the frequency channel **ch1.** It is then assumed that all of the fire sensors **10ᵢ₂** to **10ᵢₙ** except for one fire sensor **10ᵢ₁** can receive a synchronizing signal on the frequency channel **ch1** through their own second receivers **14,** and the fire sensor **10ᵢ₁** cannot receive a synchronizing signal on the frequency channel **ch1** because the fire sensor **10ᵢ₁** has changed the frequency channel, as shown in FIG. 11. Because the first controller **5** has not received a response message from the fire sensor **10ᵢ₁** during the uplink slot **D₁** of the first frame **1^{st}**, the first controller **5** performs the channel search processing described in the first embodiment in the second frame **2^{nd}**. As a result, the fire sensor **10ᵢ₁**, which has not been received a synchronizing signal on the frequency channel **ch1** in the first frame **1^{st}**, can receive a synchronizing signal on a different frequency channel (for example, on a frequency channel **ch2**).

That is, the first controller **5** controls the first transmitter **3** to transmit a slot signal containing a synchronizing signal on a specified frequency channel during the downlink slot **B** in the first frame **1^{st}** of a superframe, and also controls the first receiver **4** to receive wireless signals on the specified frequency channel during uplink slots **D₁** to **Dₘ** in the first frame **1^{st}**. A second controller **15** of each of the fire sensors **10** controls, when its own second receiver **14** successfully receives the slot signal containing a synchronizing signal, its own second transmitter **13** to transmit a wireless signal as a response during an allocated uplink slot in the first frame **1^{st}**.

Then, the first controller **5** controls, when a wireless signal as a response has not been successfully received from at least one of the fire sensors **10** during uplink slots **D₁** to **Dₘ** in the first frame **1^{st}**, the first transmitter **3** to divide (time-divide) the downlink slot **B** in the second frame **2^{nd}** into a plurality of transmitting segments **tsg1** to **tsgx** with the synchronizing signal contained in a segment signal of each of the transmitting segments **tsg1** to **tsgx** and also to sequentially transmit the segment signals of the transmitting segments **tsg1** to **tsgx** on respective different frequency channels **ch1** to **chx.** A second controller **15** of each of the fire sensors **10** controls, when the slot signal containing a synchronizing signal has not been successfully received from the repeater **1** in the first frame **1^{st}**, its own second receiver **14** so as to receive a segment signal on a variable frequency channel in the different frequency channels **ch1** to **chx** in the second frame **2^{nd}**.

The first controller **5** then controls the first receiver **3** to divide each of uplink slots **D₁** to **Dₘ** following the transmitting segments **tsg1** to **tsgx** in the second frame **2^{nd}** into a plurality of receiving segments **rsg1** to **rsgx,** and also to receive a wireless signal on a variable frequency channel which sequentially varies according to the different frequency channels **ch1** to **chx.**

According to the present embodiment, as long as the repeater **1** and fire sensors **10** can perform wireless communication on the specified frequency channel, each of the repeater **1** and fire sensors **10** does not transmit a wireless signal on unnecessary frequency channels as well as receives a wireless signal on the specified frequency channel. Accordingly, it is possible to suppress bad influence on a communication environment, and to save the batteries of the fire sensors **10.**

Incidentally, when a communication environment changes for example, the repeater **1** may not be able to receive a wireless signal from at least one of the fire sensors **10,** although each of the fire sensors **10** has successfully received a wireless signal from the repeater **1.** In such the case, it is preferable that the first controller **5** controls the first transmitter **3:** to divide a downlink slot **B** in the second frame **2^{nd}** into a plurality of transmitting segments **tsg1** to **tsgx** with a wireless signal for requesting a response for a non-responded fire sensor **10** (i.e., a request signal) contained in a segment signal of each of the transmitting segments **tsg1** to **tsgx;** and also to sequentially transmit the segment signals of the transmitting segments **tsg1** to **tsgx** on respective different frequency channels **ch1** to **chx.**

The second controller **15** controls, when its own second receiver **14** receives the wireless signal for requesting the response designating its own fire sensor **10,** the second transmitter **13** to transmit a wireless signal containing a response message during an allocated uplink slot in the second frame **2^{nd}** on a frequency channel which is different from the specified frequency channel. In the second frame **2^{nd}**, the first controller **5** performs the channel search in order to receive a wireless signal on a variable frequency channel which sequentially varies according to the different frequency channels. Accordingly, the first controller **5** can receive the response message from the fire sensor **10** in the second frame **2^{nd}**.

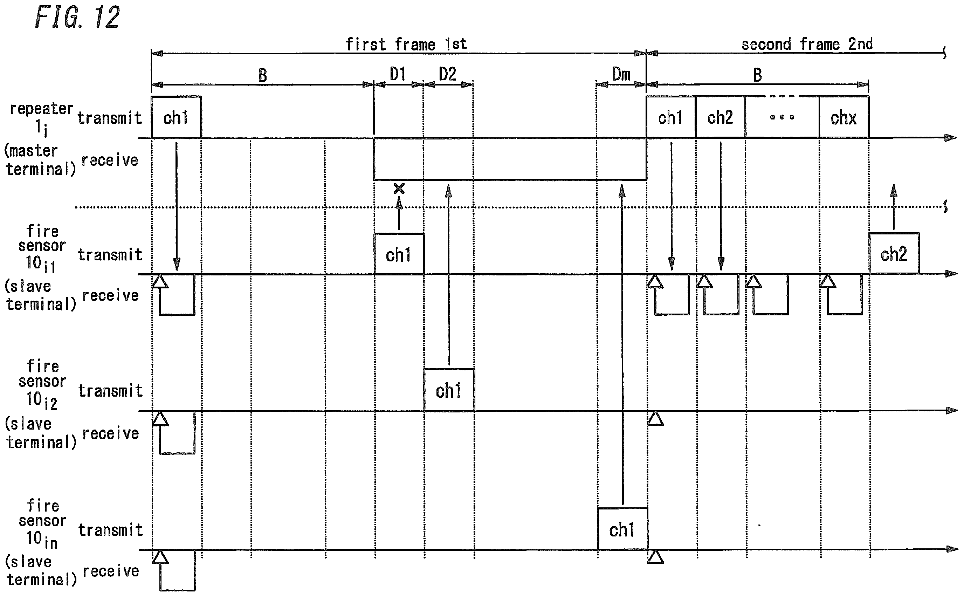

For example, as shown in FIG. 12, when a first controller **5** of a repeater **1ᵢ** fails to receive a wireless signal containing a response message from a fire sensor **10ᵢ₁** during an uplink slot **D₁** in a first frame **1^{st}**, the first controller **5** produces a request message that requests a response for the fire sensor **10ᵢ₁**, and then controls the first transmitter **3** to transmit to the fire sensor **10ᵢ₁** wireless signals containing the request messages during the downlink slot **B** in the second frame **2^{nd}** on respective different frequency channels **ch1** to **chx**. When receiving the request message during the second frame **2^{nd}**, the fire sensor **10ᵢ₁** transmits (resends) a wireless signal containing a response message on a frequency channel **ch2** which is different from a frequency channel **ch1** on which the fire sensor **10ᵢ₁** has transmitted a wireless signal in the first frame **1^{st}**.

It is preferable that, after receiving a wireless signal on a certain frequency channel in the downlink slot **B** of the second frame **2^{nd}**, the second controller **15** controls the second receiver **14** so as to receive wireless signals while sequentially varying frequency channels. And then, the second controller **15** randomly select one frequency channel from among frequency channels on which the second receiver **14** has received wireless signals. For example, when the second receiver **14** has received wireless signals on channels **ch2, ch5,** and **ch8,** the second controller **15** randomly selects one frequency channel (e.g., channel **ch2**) from among the frequency channels **ch2, ch5,** and **ch8.** The second controller **15** then controls the second transmitter **13** to transmit a wireless signal containing the response message on the selected frequency channel (e.g., **ch2**) in an uplink slot of the second frame **2^{nd}**. According to this configuration, because each of the frequency channels can be selected evenly by the second controller **15,** it is possible to reduce the probability that a communication error reoccurs.

Note that the second controller **15** may select one frequency channel which has not been used for transmitting the response signal in the present superframe from among a plurality of frequency channels prepared to transmit a wireless signal containing a response message on the selected frequency channel. For example, in a case where eight frequency channels **ch1** to **ch8** are prepared for communication and the fire sensor **10** has transmitted a wireless signal on frequency channels **ch1** to **ch4** in the first to fourth frames **1^{st}** to **4^{th}**, respectively, the second controller **15** may select any one of the unselected frequency channels **ch5** to **ch8.** With this configuration, because each of the frequency channels can be selected evenly by the second controller **15,** it is possible to reduce the probability that a communication error reoccurs.

## Claims

1. A wireless communication system comprising:
a master terminal **(1)** and slave terminals **(10),** which are configured to perform wireless communication with each other in accordance with a time division multiple access protocol,
wherein the master terminal **(1)** comprises:
a first transmitter **(3)** configured to transmit a wireless signal;
a first receiver **(4)** configured to receive a wireless signal; and
a first controller **(5)** configured to control the first transmitter **(3)** and the first receiver **(4),** and
each of the slave terminals **(10)** comprises:
a second transmitter **(13)** configured to transmit a wireless signal;
a second receiver **(14)** configured to receive a wireless signal; and
a second controller **(15)** configured to control the second transmitter **(13)** and
the second receiver **(14),**
wherein each of the master and slave terminals **(1** and **10)** is configured to transmit and receive wireless signals on a superframe basis, the superframe being composed of first and following frames (**1^{st}** and **2^{nd}** to **30^{th}**), each frame of the superframe consisting of a plurality of time slots,
wherein the first frame (**1^{st}**) comprises: a downlink slot **(B),** comprising a synchronizing signal, from the master terminal **(1)** to the slave terminals **(10);** and uplink slots (**D₁** to **Dₘ**), pre-allocated to respective slave terminals **(10),** from the slave terminals **(10)** to the master terminal **(1),**
wherein
the first controller (5) is configured to control the first transmitter **(3)** to divide the downlink slot **(B)** into a plurality of transmitting segments (**tsg1** to **tsgx)** with the synchronizing signal contained in a segment signal of each of the transmitting segments (**tsg1** to **tsgx)** and also to sequentially transmit the segment signals of the transmitting segments **(tsg1** to **tsgx)** on respective different frequency channels **(ch1** to **chx),** said segment signal being a wireless signal transmitted during each of the transmitting segments (**tsg1** to **tsgx)** in the downlink slot (B) and
a second controller **(15)** of each of the slave terminals **(10)** is configured to control a second receiver **(14)** corresponding to the second controller **(15)** to receive the segment signal on a variable frequency channel selected from said different frequency channels **(ch1** to **chx).**

2. The wireless communication system according to claim 1, wherein a second controller **(15)** of each of the slave terminals **(10)** is configured, after successfully receiving the segment signal on the variable frequency channel, to turn off a second receiver **(14)** corresponding to the second controller **(15).**

3. The wireless communication system according to claim 1 or 2, wherein a second controller **(15)** of each of the slave terminals **(10)** is configured, after successfully receiving the segment signal on the variable frequency channel, to control a second transmitter **(13)** corresponding to the second controller **(15)** to transmit a wireless signal during a pre-allocated uplink slot on a frequency channel which is the same as the frequency channel on which the second receiver has successfully received segment signal containing the synchronization signal, and
the first controller **(5)** is configured to control the first receiver **(4)** to divide each of the uplink slots **(D₁** to **Dₘ**) into a plurality of receiving segments (**rsg1** to **regx)** and also to receive a wireless signal on a variable frequency channel which sequentially varies according to said different frequency channels **(ch1** to **chx).**

4. The wireless communication system according to any one of claims 1 to 3,
wherein
each of the master and slave terminals **(1** and **10)** comprises a console unit **(7** or **16)** through which an operation instruction is input, and
each of the first and second controllers **(5** and **15)** is configured to select frequency channels as said different frequency channels (**ch1** to **chx**) from frequency channel candidates through its own console unit **(7** or **16)** so that unselected frequency channel candidates are not treated as said different frequency channels (**ch1** to **chx**).

5. The wireless communication system according to any one of claims 1 to 3,
wherein
the first controller **(5)** stores a master identifier assigned to the master terminal **(1)** and slave identifiers assigned to respective slave terminals **(10),**
each second controller **(15)** of the slave terminals **(10)** stores a slave identifier assigned to its own slave terminal and the master identifier, and
each of the first and second controllers **(5** and **15)** is configured to select frequency channels as said different frequency channels (**ch1** to **chx)** from frequency channel candidates in accordance with the master identifier so that unselected frequency channel candidates are not treated as said different frequency channels (**ch1** to **chx).**

6. The wireless communication system according to any one of claims 1 to 5, wherein the first controller **(5)** is allowed to change order of said different frequency channels (**ch1** to **chx).**

7. The wireless communication system according to claim 3, wherein the first controller (5) is configured to give a priority to a frequency channel corresponding to each of wireless signals successfully received through the first receiver **(4)** from the slave terminals **(10),** and to change said different frequency channels (**ch1** to **chx)** so that a frequency channel with the priority is prioritized than a frequency channel without the priority.

8. The wireless communication system according to any one of claims 1 to 5, wherein the first controller **(5)** is configured to control the first transmitter **(3)** to transmit the segment signal of a first transmitting segment **(tsg1)** on a specified frequency channel, and allowed to change order of said different frequency channels in transmitting segments (**tsg2** to **tsgx)** following the first transmitting segment.

9. The wireless communication system according to any one of claims 1 to 8,
wherein
the first controller **(5)** is configured to allow the first transmitter **(3)** to transmit the segment signals of the transmitting segments (**tsg1** to **tsgx)** in the downlink slot **(B)** of the first frame (**1^{st}**) and also to allow the first receiver **(4)** to operate during every uplink slot **(D₁** to **Dₘ)** of the superframe, and
a second controller **(15)** of each of the slave terminals **(10)** is configured, when a second receiver **(14)** corresponding to the second controller **(15)** successfully receives a segment signal in the downlink slot **(B)** of the first frame (**1^{st}**): to
(a) allow a second transmitter **(13)** corresponding to the second controller **(15)** to transmit a wireless signal as a response during a pre-allocated uplink slot in the first frame (**1^{st}**); and
(b) turn off the second receiver **(14)** corresponding to the second controller **(15)** during downlink slots, of said following frames (**2^{nd}** to **30^{th}**), except for a slot corresponding to a transmitting segment during which a segment signal has been successfully received.

10. The wireless communication system according to claim 9, wherein a second controller **(15)** of each of the slave terminals **(10)** is configured, in each first frame (**1^{st}**) of superframes, to control a second receiver **(14)** corresponding to the second controller **(15)** to receive a segment signal on a variable frequency channel in said different frequency channels **(ch1** to **chx).**

11. The wireless communication system according to any one of claims 1 to 10,
wherein
the first controller **(5)** is configured to allow the first transmitter **(3)** to transmit the segment signals of the transmitting segments **(tsg1** to **tsgx)** in the downlink slot **(B)** of the first frame (**1^{st}**) and also to allow the first receiver **(4)** to operate during every uplink slot (**D₁** to **Dₘ**) of the superframe,
a second controller **(15)** of each of the slave terminals **(10)** is configured, when a second receiver **(14)** corresponding to the second controller **(15)** successfully receives a segment signal in the downlink slot **(B)** of the first frame (**1^{st}**), to allow a second transmitter **(13)** corresponding to the second controller (15) to transmit a wireless signal as a response during a pre-allocated uplink slot in the first frame (**1^{st}**), and
the first controller **(5)** is configured, during said following frames (**2^{nd}** to **30^{th}**), to control the first transmitter **(3)** to transmit a wireless signal on a frequency channel corresponding to an uplink slot in the first frame (**1^{st}**) during which a wireless signal as a response has been successfully received through the first receiver **(4).**

12. A wireless communication system, comprising:
a master terminal **(1)** and slave terminals **(10),** which are configured to perform wireless communication with each other in accordance with a time division multiple access protocol,
wherein the master terminal **(1)** comprises:
a first transmitter **(3)** configured to transmit a wireless signal;
a first receiver **(4)** configured to receive a wireless signal; and
a first controller **(5)** configured to control the first transmitter **(3)** and the first receiver **(4),** and
each of the slave terminals **(10)** comprises:
a second transmitter **(13)** configured to transmit a wireless signal;
a second receiver **(14)** configured to receive a wireless signal; and
a second controller **(15)** configured to control the second transmitter **(13)** and the second receiver **(14),** wherein
the first controller **(5)** is configured: to allow the first transmitter **(3)** to transmit a slot signal containing a synchronizing signal on a specified frequency channel during a downlink slot **(B)** in a first frame (**1^{st}**) of a superframe composed of the first frame (**1^{st}**) and following frames (**2^{nd}** to **30^{th}**); and also to control the first receiver **(4)** to receive wireless signals on the specified frequency channel during uplink slots (**D₁** to **Dₘ**) in the first frame (**1^{st}**),
a second controller **(15)** of each of the slave terminals **(10)** is configured, when a second receiver **(14)** corresponding to the second controller **(15)** successfully receives the slot signal, to allow a second transmitter **(13)** corresponding to the second controller **(15)** to transmit a wireless signal as a response during a pre-allocated uplink slot in the first frame (**1^{st}**), and
wherein the first controller **(5)** is configured, when a wireless signal as a response has not been successfully received from at least one of the slave terminals **(10)** during uplink slots **(D₁** to **Dₘ)** in the first frame (**1^{st}**), to control the first transmitter **(3)** to divide a downlink slot **(B)** in a second frame (**2^{nd}**) in said following frames into a plurality of transmitting segments (**tsg1** to **tsgx)** with the synchronizing signal contained in a segment signal of each of the transmitting segments (**tsg1** to **tsgx)** and also to sequentially transmit the segment signals of the transmitting segments (**tsg1** to **tsgx)** on respective different frequency channels **(ch1** to **chx),** said segment signal being a wireless signal (**tsg1** to **tsgx)** transmitted during each of said transmitting segments in the downlink slot **(B),**
a second controller **(15)** of each of the slave terminals **(10)** is configured, when a slot signal containing a synchronizing signal has not been successfully received from the master terminal **(1)** in the first frame (**1^{st}**), to control a second receiver **(14)** corresponding to the second controller **(15)** to receive the segment signal on a variable frequency channel selected from said different frequency channels **(ch1** to **chx)** in the second frame (**2^{nd}**).

13. The wireless communication system according to claim 12, wherein
the first controller **(5)** is configured, when the first controller **(5)** fails to receive a wireless signal as a response from any of the slave terminals **(10)** during the uplink slots (**D₁** to **Dₘ**) in the first frame (**1^{st}**), to divide a downlink slot **(B)** in the second frame (**2^{nd}**) into a plurality of transmitting segments (**tsg1** to **tsgx)** with a wireless signal for requesting a response for a non-responded slave terminal contained in a segment signal of each of the transmitting segments (**tsg1** to **tsgx)** and also to sequentially transmit the segment signals of the transmitting segments (**tsg1** to **tsgx)** on respective different frequency channels **(ch1** to **chx),** and
a second controller **(15)** of each of the slave terminals **(10)** is configured, when a second receiver **(14)** corresponding to the second controller **(15)** has received the wireless signal for requesting the response, to control a second transmitter **(13)** corresponding to the second controller **(15)** to transmit a wireless signal as a response during a pre-allocated uplink slot in the second frame (**2^{nd}**) on a frequency channel which is different from the specified frequency channel.

14. The wireless communication system according to claim 13, wherein a second controller **(15)** of each of the slave terminals **(10)** is configured, when a second receiver **(14)** corresponding to the second controller **(15)** has received the wireless signals for requesting the response on more than one frequency channel, to select any one of said more than one frequency channels, and to control a second transmitter **(13)** corresponding to the second controller **(15)** to transmit a wireless signal as a response on the selected frequency channel.

15. The wireless communication system according to claim 13 or 14, wherein a second controller **(15)** of each of the slave terminals **(10)** is configured, when a second receiver **(14)** corresponding to the second controller **(15)** has received the wireless signal for requesting the response, to
select one frequency channel which has not been used for transmitting the response signal in the present superframe from a plurality of frequency channel candidates, and
to control a second transmitter **(13)** corresponding to the second controller **(15)** to transmit a wireless signal as a response on the frequency channel selected from unselected frequency channels in said different frequency channels **(ch1 to chx).**

## Patentansprüche

1. Drahtloses Kommunikationssystem, aufweisend:
einen Masteranschluss (1) und Slaveanschlüsse (10), die dazu eingerichtet sind, gemäß einem Zeitmultiplexprotokoll miteinander drahtlose Kommunikation durchzuführen,
wobei der Masteranschluss (1) aufweist:
einen ersten Sender (3), der dazu eingerichtet ist, ein drahtloses Signal zu senden;
einen ersten Empfänger (4), der dazu eingerichtet ist, ein drahtloses Signal zu empfangen; und
eine erste Steuereinrichtung (5), die dazu eingerichtet ist, den ersten Sender (3) und den ersten Empfänger (4) zu steuern, und wobei
jeder der Slaveanschlüsse (10) aufweist:
einen zweiten Sender (13), der dazu eingerichtet ist, ein drahtloses Signal zu senden;
einen zweiten Empfänger (14), der dazu eingerichtet ist, ein drahtloses Signal zu empfangen; und
eine zweite Steuereinrichtung (15), die dazu eingerichtet ist, den zweiten Sender (13) und den zweiten Empfänger (14) zu steuern,
wobei jeder der Master- und Slaveanschlüsse (1 und 10) dazu eingerichtet ist, drahtlose Signale auf einer Superframebasis zu senden und zu empfangen, wobei der Superframe auf einen ersten und darauf folgenden Frames (1. und 2. bis 30.) basiert, wobei jeder Frame des Superframes mehrere Zeitschlitze aufweist,
wobei der erste Frame (1.) aufweist: einen Downlinkschlitz (B), der ein Synchronisierungssignal von dem Masteranschluss (1) zu den Slaveanschlüssen (10) enthält; und Uplinkschlitze (D1 bis Dm), die zuvor entsprechenden Slaveanschlüssen (10) zugeteilt sind, von den Slaveanschlüssen (10) zu dem Masteranschluss (1),
wobei die erste Steuereinrichtung (5) dazu eingerichtet ist, den ersten Sender (3) zu veranlassen, den Downlinkschlitz (B) in mehrere Sendesegmente (tsg1 bis tsgx) zu unterteilen, wobei das Synchronisierungssignal in einem Segmentsignal jedes der Sendesegmente (tsg1 zu tsgx) enthalten ist, und darüber hinaus die Segmentsignale der Sendesegmente (tsg1 bis tsgx) nacheinander auf entsprechenden unterschiedlichen Frequenzkanälen (ch1 bis chx) zu senden, wobei das Segmentsignal ein drahtloses Signal ist, das während jedes der Sendesegmente (tsg1 bis tsgx) in dem Downlinkschlitz (B) gesendet wird, und
eine zweite Steuereinrichtung (15) jedes der Slaveanschlüsse (10) dazu eingerichtet ist, einen zweiten Empfänger (14), der der zweiten Steuereinrichtung (15) entspricht, zu veranlassen, das Segmentsignal auf einem frequenzveränderlichen Kanal zu empfangen, der aus den unterschiedlichen Frequenzkanälen (ch1 bis chx) ausgewählt ist.

2. Drahtloses Datenkommunikationssystem nach Anspruch 1, wobei eine zweite Steuereinrichtung (15) jedes der Slaveanschlüsse (10) dazu eingerichtet ist, nach einem erfolgreichen Empfang des Segmentsignals auf dem frequenzveränderlichen Kanal einen zweiten Empfänger (14), der der zweiten Steuereinrichtung (15) entspricht, auszuschalten.

3. Drahtloses Datenkommunikationssystem nach Anspruch 1 oder 2, wobei eine zweite Steuereinrichtung (15) jedes der Slaveanschlüsse (10) dazu eingerichtet ist, nach einem erfolgreichen Empfang des Segmentsignals auf dem frequenzveränderlichen Kanal, einen zweiten Sender (13), der der zweiten Steuereinrichtung (15) entspricht, zu veranlassen, während eines vorher zugeteilten Uplinkschlitzes ein drahtloses Signal auf einem Frequenzkanal zu senden, der mit dem Frequenzkanal übereinstimmt, auf dem der zweite Empfänger das Segmentsignal erfolgreich empfangen hat, das das Synchronisierungssignal enthält, und
die erste Steuereinrichtung (5) dazu eingerichtet ist, den ersten Empfänger (4) zu veranlassen, jeden der Uplinkschlitze (D1 bis Dm) in mehrere Empfangssegmente (rsg1 bis rsgx) zu unterteilen und außerdem ein drahtloses Signal auf einem frequenzveränderlichen Kanal zu empfangen, der gemäß den unterschiedlichen Frequenzkanälen (ch1 bis chx) sequentiell variiert.

4. Drahtloses Datenkommunikationssystem nach einem beliebigen der Ansprüche 1 bis 3, wobei
jeder der Master- und Slaveanschlüsse (1 und 10) eine Konsoleneinheit (7 oder 16) aufweist, über die ein Operationsbefehl eingegeben wird, und
sowohl die erste als auch die zweite Steuereinrichtung (5 und 15) dazu eingerichtet sind, über ihre eigene Konsoleneinheit (7 oder 16) Frequenzkanäle als die unterschiedlichen Frequenzkanäle (ch1 bis chx) aus in Frage kommenden Frequenzkanälen auszuwählen, so dass nicht ausgewählte in Frage kommende Frequenzkanäle nicht als die unterschiedlichen Frequenzkanäle (ch1 bis chx) behandelt werden.

5. Drahtloses Datenkommunikationssystem nach einem beliebigen der Ansprüche 1 bis 3, wobei
die erste Steuereinrichtung (5) eine Masterkennung, die dem Masteranschluss (1) zugewiesen ist, und Slavekennungen speichert, die den entsprechenden Slaveanschlüssen (10) zugewiesen sind, wobei jede zweite Steuereinrichtung (15) der Slaveanschlüsse (10) eine Slavekennung speichert, die ihrem eigenen Slaveanschluss und der Masterkennung zugewiesen ist, und
sowohl die erste als auch die zweite Steuereinrichtung (5 und 15) dazu eingerichtet sind, Frequenzkanäle als die unterschiedlichen Frequenzkanäle (ch1 bis chx) aus in Frage kommenden Frequenzkanälen gemäß der Masterkennung auszuwählen, so dass nicht ausgewählte in Frage kommende Frequenzkanäle nicht als die unterschiedlichen Frequenzkanäle (ch1 bis chx) behandelt werden.

6. Drahtloses Datenkommunikationssystem nach einem beliebigen der Ansprüche 1 bis 5, wobei es der ersten Steuereinrichtung (5) gestattet ist, eine Reihenfolge der unterschiedlichen Frequenzkanäle (ch1 bis chx) zu ändern.

7. Drahtloses Datenkommunikationssystem nach Anspruch 3, wobei die erste Steuereinrichtung (5) dazu eingerichtet ist, einem Frequenzkanal, der jedem von drahtlosen Signale entspricht, die durch den ersten Empfänger (4) von den Slaveanschlüssen (10) erfolgreich empfangen sind, einen Vorrang zu verleihen und die unterschiedlichen Frequenzkanäle (ch1 bis chx) zu ändern, so dass ein Frequenzkanal mit dem Vorrang gegenüber einem Frequenzkanal ohne dem Vorrang vorrangig behandelt wird.

8. Drahtloses Datenkommunikationssystem nach einem beliebigen der Ansprüche 1 bis 5, wobei die erste Steuereinrichtung (5) dazu eingerichtet ist, den ersten Sender (3) zu veranlassen, das Segmentsignal eines ersten Sendesegments (tsg1) auf einem spezifizierten Frequenzkanal zu senden, und es ihr gestattet ist, eine Reihenfolge der unterschiedlichen Frequenzkanäle in Sendesegmenten (tsg2 bis tsgx), die auf das erste Sendesegment folgen, zu ändern.

9. Drahtloses Datenkommunikationssystem nach einem beliebigen der Ansprüche 1 bis 8, wobei
die erste Steuereinrichtung (5) dazu eingerichtet ist, dem ersten Sender (3) zu gestatten, die Segmentsignale der Sendesegmente (tsg1 bis tsgx) in dem Downlinkschlitz (B) des ersten Frames (15t) zu senden, und darüber hinaus dem ersten Empfänger (4) zu gestatten, während jedes Uplinkschlitzes (D1 bis Dm) des Superframes zu arbeiten, und
eine zweite Steuereinrichtung (15) jedes der Slaveanschlüsse (10) dazu eingerichtet ist, wenn ein zweiter Empfänger (14), der der zweiten Steuereinrichtung (15) entspricht, ein Segmentsignal in dem Downlinkschlitz (B) des ersten Frames (1.) erfolgreich empfängt, Folgendes auszuführen:
(a) einem zweiten Sender (13), der der zweiten Steuereinrichtung (15) entspricht, zu gestatten, ein drahtloses Signal während eines vorher zugeteilten Uplinkschlitzes (1.) als eine Antwort zu senden; und
(b) den zweiten Empfänger (14), der der zweiten Steuereinrichtung (15) entspricht, während Downlinkschlitzen, der folgenden Frames (2. bis 30.), außer im Falle eines Schlitzes auszuschalten, der einem Sendesegment entspricht, während dessen ein Segmentsignal erfolgreich empfangen wurde.

10. Drahtloses Datenkommunikationssystem nach Anspruch 9, wobei eine zweite Steuereinrichtung (15) jedes der Slaveanschlüsse (10) dazu eingerichtet ist, in jedem ersten Frame (1.) von Superframes einen zweiten Empfänger (14), der der zweiten Steuereinrichtung (15) entspricht, zu veranlassen, ein Segmentsignal auf einem frequenzveränderlichen Kanal in den unterschiedlichen Frequenzkanälen (ch1 bis chx) zu empfangen.

11. Drahtloses Datenkommunikationssystem nach einem beliebigen der Ansprüche 1 bis 10, wobei
die erste Steuereinrichtung (5) dazu eingerichtet ist, dem ersten Sender (3) zu gestatten, die Segmentsignale der Sendesegmente (tsg1 bis tsgx) in dem Downlinkschlitz (B) des ersten Frames (1.) zu senden, und außerdem dem ersten Empfänger (4) zu gestatten, während jedes Uplinkschlitzes (D1 bis Dm) des Superframes zu arbeiten,
eine zweite Steuereinrichtung (15) jedes der Slaveanschlüsse (10) dazu eingerichtet ist, wenn ein zweiter Empfänger (14), der der zweiten Steuereinrichtung (15) entspricht, ein Segmentsignal in dem Downlinkschlitz (B) des ersten Frames (1.) erfolgreich empfängt, einem zweiten Sender (13), der der zweiten Steuereinrichtung (15) entspricht, zu gestatten, ein drahtloses Signal als eine Antwort während eines vorher zugeteilten Uplinkschlitzes (1.) zu senden, und
die erste Steuereinrichtung (5) dazu eingerichtet ist, während der folgenden Frames (2. bis 30.) den ersten Sender (3) zu veranlassen, ein drahtloses Signal auf einem Frequenzkanal zu senden, der einem Uplinkschlitz in dem ersten Frame (1.) entspricht, während dessen durch den ersten Empfänger (4) ein drahtloses Signal als eine Antwort erfolgreich empfangen wurde.

12. Drahtloses Kommunikationssystem, aufweisend:
einen Masteranschluss (1) und Slaveanschlüsse (10), die dazu eingerichtet sind, miteinander eine drahtlose Kommunikation gemäß einem Zeitmultiplexprotokoll durchzuführen,
wobei der Masteranschluss (1) aufweist:
einen ersten Sender (3), der dazu eingerichtet ist, ein drahtloses Signal zu senden;
einen ersten Empfänger (4), der dazu eingerichtet ist, ein drahtloses Signal zu empfangen; und
eine erste Steuereinrichtung (5), die dazu eingerichtet ist, den ersten Sender (3) und den ersten Empfänger (4) zu steuern, und
jeder der Slaveanschlüsse (10) aufweist:
einen zweiten Sender (13), der dazu eingerichtet ist, ein drahtloses Signal zu senden;
einen zweiten Empfänger (14), der dazu eingerichtet ist, ein drahtloses Signal zu empfangen; und
eine zweite Steuereinrichtung (15), die dazu eingerichtet ist, den zweiten Sender (13) und den zweiten Empfänger (14) zu steuern, wobei
die erste Steuereinrichtung (5) dazu eingerichtet ist: dem ersten Sender (3) zu gestatten, ein Schlitzsignal, das ein Synchronisierungssignal enthält, auf einem spezifizierten Frequenzkanal während eines Downlinkschlitzes (B) in einem ersten Frame (1.) eines Superframes zu senden, der auf dem ersten Frame (1.) und nachfolgenden Frames (2. bis 30.) basiert; und außerdem den ersten Empfänger (4) zu veranlassen, drahtlose Signale auf dem spezifizierten Frequenzkanal während Uplinkschlitzen (D1 bis Dm) in dem ersten Frame (1.) zu empfangen,
eine zweite Steuereinrichtung (15) jedes der Slaveanschlüsse (10) dazu eingerichtet ist, wenn ein zweiter Empfänger (14), der der zweiten Steuereinrichtung (15) entspricht, das Schlitzsignal erfolgreich aufnimmt, einem zweiten Sender (13), der der zweiten Steuereinrichtung (15) entspricht, zu gestatten, ein drahtloses Signal während eines vorher zugeteilten Uplinkschlitzes (1.) als eine Antwort zu senden, und
wobei die erste Steuereinrichtung (5) dazu eingerichtet ist, wenn ein drahtloses Signal während Uplinkschlitzen (D1 bis Dm) in dem ersten Frame (1.) nicht erfolgreich als eine Antwort von wenigstens einem der Slaveanschlüsse (10) her empfangen wurde, den ersten Sender (3) zu veranlassen, einen Downlinkschlitz (B) in einem zweiten Frame (2.) in den nachfolgenden Frames in mehrere Sendesegmente (tsg1 bis tsgx) zu unterteilen, wobei das Synchronisierungssignal in einem Segmentsignal jedes der Sendesegmente (tsg1 bis tsgx) enthalten ist, und darüber hinaus aufeinanderfolgend die Segmentsignale der Sendesegmente (tsg1 bis tsgx) auf entsprechenden unterschiedlichen Frequenzkanälen (ch1 bis chx) zu senden, wobei das Segmentsignal ein drahtloses Signal (tsg1 bis tsgx) ist, das während jedes der Sendesegmente in dem Downlinkschlitz (B) gesendet wird,
eine zweite Steuereinrichtung (15) jedes der Slaveanschlüsse (10) dazu eingerichtet ist, wenn ein Schlitzsignal, das ein Synchronisierungssignal enthält, von dem Masteranschluss (1) in dem ersten Frame (1.) her nicht erfolgreich empfangen wurde, einen zweiten Empfänger (14), der der zweiten Steuereinrichtung (15) entspricht, zu veranlassen, das Segmentsignal auf einem frequenzveränderlichen Kanal zu empfangen, der aus den unterschiedlichen Frequenzkanälen (ch1 bis chx) in dem zweiten Frame (2.) ausgewählt wird.

13. Drahtloses Datenkommunikationssystem nach Anspruch 12, wobei
die erste Steuereinrichtung (5) dazu eingerichtet ist, wenn die erste Steuereinrichtung (5) kein drahtloses Signal als eine Antwort von irgendeinem der Slaveanschlüsse (10) während der Uplinkschlitze (D1 bis Dm) in dem ersten Frame (1.) empfängt, einen Downlinkschlitz (B) in dem zweiten Frame (2.) in mehrere Sendesegmente (tsg1 bis tsgx) zu unterteilen, wobei ein drahtloses Signal zum Anfordern einer Antwort für einen nicht beantworteten Slaveanschluss in einem Segmentsignal jedes der Sendesegmente (tsg1 bis tsgx) enthalten ist, und darüber hinaus die Segmentsignale der Sendesegmente (tsg1 bis tsgx) auf entsprechenden unterschiedlichen Frequenzkanälen (ch1 bis chx) aufeinanderfolgend zu senden, und
eine zweite Steuereinrichtung (15) jedes der Slaveanschlüsse (10) dazu eingerichtet ist, wenn ein zweiter Empfänger (14), der der zweiten Steuereinrichtung (15) entspricht, das drahtlose Signal zum Anfordern der Antwort empfangen hat, einen zweiten Sender (13), der der zweiten Steuereinrichtung (15) entspricht, zu veranlassen, ein drahtloses Signal als eine Antwort während eines vorher zugeteilten Uplinkschlitzes in dem zweiten Frame (2.) auf einem Frequenzkanal zu senden, der sich von dem spezifizierten Frequenzkanal unterscheidet.

14. Drahtloses Datenkommunikationssystem nach Anspruch 13, wobei eine zweite Steuereinrichtung (15) jedes der Slaveanschlüsse (10) dazu eingerichtet ist, wenn ein zweiter Empfänger (14), der der zweiten Steuereinrichtung (15) entspricht die drahtlosen Signale zum Anfordern der Antwort auf mehr als einem Frequenzkanal empfangen hat, einen beliebigen der mehr als einen Frequenzkanäle auszuwählen, und einen zweiten Sender (13), der der zweiten Steuereinrichtung (15) entspricht, zu veranlassen, auf dem ausgewählten Frequenzkanal ein drahtloses Signal als eine Antwort zu senden.

15. Drahtloses Datenkommunikationssystem nach Anspruch 13 oder 14, wobei eine zweite Steuereinrichtung (15) jedes der Slaveanschlüsse (10) dazu eingerichtet ist, wenn ein zweiter Empfänger (14), der der zweiten Steuereinrichtung (15) entspricht, das drahtlose Signal zum Anfordern der Antwort empfangen hat,
aus mehreren in Frage kommenden Frequenzkanälen einen Frequenzkanal auszuwählen, der nicht zum Senden des Antwortsignals in dem aktuellen Superframe verwendet wurde, und
einen zweiten Sender (13), der der zweiten Steuereinrichtung (15) entspricht, zu veranlassen, ein drahtloses Signal als eine Antwort auf dem Frequenzkanal zu senden, der unter nicht ausgewählten Frequenzkanälen in den unterschiedlichen Frequenzkanälen (ch1 bis chx) ausgewählt ist.

## Revendications

1. Système de communication sans fil comprenant :
un terminal maître (1) et des terminaux esclaves (10), qui sont configurés pour effectuer une communication sans fil les uns avec les autres conformément à un protocole d'accès multiples à répartition dans le temps,
dans lequel le terminal maître (1) comprend :
un premier émetteur (3) configuré pour émettre un signal hertzien ;
un premier récepteur (4) configuré pour recevoir un signal hertzien ; et
un premier contrôleur (5) configuré pour commander le premier émetteur (3) et le premier récepteur (4), et
chacun des terminaux esclaves (10) comprend :
un deuxième émetteur (13) configuré pour émettre un signal hertzien ;
un deuxième récepteur (14) configuré pour recevoir un signal hertzien ; et
un deuxième contrôleur (15) configuré pour commander le deuxième émetteur (13) et le deuxième récepteur (14),
dans lequel chacun des terminaux maître et esclaves (1 et 10) est configuré pour émettre et recevoir des signaux hertziens sur une base de supertrame, la supertrame étant composée d'une première trame et de trames suivantes (1^{ère} et 2^{è} à 30^{è}), chaque trame de la supertrame consistant en une pluralité de tranches de temps,
dans lequel la première trame (1^{ère}) comprend : une tranche de liaison descendante (B), comprenant un signal de synchronisation, du terminal maître (1) vers les terminaux esclaves (10) ; et des tranches de liaison montante (D₁ à Dₘ)), attribuées au préalable aux terminaux esclaves (10) respectifs, des terminaux esclaves (10) vers le terminal maître (1),
dans lequel le premier contrôleur (5) est configuré pour commander le premier émetteur (3) pour diviser la tranche de liaison descendante (B) en une pluralité de segments d'émission (tsg1 à tsgx), le signal de synchronisation étant contenu dans un signal de segment de chacun des segments d'émission (tsg1 à tsgx), et également pour émettre séquentiellement les signaux de segment des segments d'émission (tsg1 à tsgx) sur différents canaux de fréquence (ch1 à chx) respectifs, ledit signal de segment étant un signal hertzien émis pendant chacun des segments d'émission (tsg1 à tsgx) dans la tranche de liaison descendante (B), et
un deuxième contrôleur (15) de chacun des terminaux esclaves (10) est configuré pour commander un deuxième récepteur (14) correspondant au deuxième contrôleur (15) pour recevoir le signal de segment sur un canal de fréquence variable sélectionné parmi lesdits différents canaux de fréquence (ch1 à chx).

2. Système de communication sans fil selon la revendication 1, dans lequel un deuxième contrôleur (15) de chacun des terminaux esclaves (10) est configuré, après la réception avec succès du signal de segment sur le canal de fréquence variable, pour désactiver un deuxième récepteur (14) correspondant au deuxième contrôleur (15).

3. Système de communication sans fil selon la revendication 1 ou 2, dans lequel un deuxième contrôleur (15) de chacun des terminaux esclaves (10) est configuré, après la réception avec succès du signal de segment sur le canal de fréquence variable, pour commander un deuxième émetteur (13) correspondant au deuxième contrôleur (15) pour qu'il émette un signal hertzien pendant une tranche de liaison montante attribuée au préalable sur un canal de fréquence qui est identique au canal de fréquence sur lequel le deuxième récepteur a reçu avec succès un signal de segment contenant le signal de synchronisation, et
le premier contrôleur (5) est configuré pour commander le premier récepteur (4) pour diviser chacune des tranches de liaison montante (D1 à Dm) en une pluralité de segments de réception (rsg1 à regx) et également pour recevoir un signal hertzien sur un canal de fréquence variable qui varie séquentiellement conformément aux dits différents canaux de fréquence (ch1 à chx).

4. Système de communication sans fil selon l'une quelconque des revendications 1 à 3, dans lequel
chacun des terminaux maître et esclaves (1 et 10) comprend une unité de console (7 ou 16) par laquelle une instruction d'opération est entrée, et
chacun des premier et deuxième contrôleurs (5 et 15) est configuré pour sélectionner des canaux de fréquence en tant que dits différents canaux de fréquence (ch1 à chx) parmi des canaux de fréquence candidats par l'intermédiaire de sa propre unité de console (7 ou 16) de sorte que les canaux de fréquence candidats non sélectionnés ne soient pas traités en tant que dits différents canaux de fréquence (ch1 à chx).

5. Système de communication sans fil selon l'une quelconque des revendications 1 à 3, dans lequel
le premier contrôleur (5) mémorise un identifiant de maître attribué au terminal maître (1) et des identifiants d'esclave attribués aux terminaux esclaves (10) respectifs,
chaque deuxième contrôleur (15) des terminaux esclaves (10) mémorise un identifiant d'esclave attribué à son propre terminal esclave et l'identifiant de maître, et
chacun des premier et deuxième contrôleurs (5 et 15) est configuré pour sélectionner des canaux de fréquence en tant que dits différents canaux de fréquence (ch1 à chx) parmi les canaux de fréquence candidats conformément à l'identifiant de maître de sorte que les canaux de fréquence candidats non sélectionnés ne soient pas traités en tant que dits différents canaux de fréquence (ch1 à chx).

6. Système de communication sans fil selon l'une quelconque des revendications 1 à 5, dans lequel le premier contrôleur (5) est autorisé à changer l'ordre desdits différents canaux de fréquence (ch1 à chx).

7. Système de communication sans fil selon la revendication 3, dans lequel le premier contrôleur (5) est configuré pour donner une priorité à un canal de fréquence correspondant à chacun des signaux hertziens reçus avec succès par l'intermédiaire du premier récepteur (4) à partir des terminaux esclaves (10), et pour changer lesdits différents canaux de fréquence (ch1 à chx) de sorte qu'un canal de fréquence avec la priorité soit plus prioritaire qu'un canal de fréquence sans la priorité.

8. Système de communication sans fil selon l'une quelconque des revendications 1 à 5, dans lequel le premier contrôleur (5) est configuré pour commander le premier émetteur (3) pour qu'il émette le signal de segment d'un premier segment d'émission (tsg1) sur un canal de fréquence spécifié, et est autorisé à changer l'ordre desdits différents canaux de fréquence dans les segments d'émission (tsg2 à tsgx) qui suivent le premier segment d'émission.

9. Système de communication sans fil selon l'une quelconque des revendications 1 à 8, dans lequel
le premier contrôleur (5) est configuré pour permettre au premier émetteur (3) d'émettre les signaux de segment des segments d'émission (tsg1 à tsgx) dans la tranche de liaison descendante (B) de la première trame (1^{ère}) et également pour permettre au premier récepteur (4) de fonctionner pendant chaque tranche de liaison montante (D1 à Dm) de la supertrame, et
un deuxième contrôleur (15) de chacun des terminaux esclaves (10) est configuré, lorsqu'un deuxième récepteur (14) correspondant au deuxième contrôleur (15) reçoit avec succès un signal de segment dans la tranche de liaison descendante (B) de la première trame (1^{ère}) :
(a) pour permettre à un deuxième émetteur (13) correspondant au deuxième contrôleur (15) d'émettre un signal hertzien en tant que réponse pendant une tranche de liaison montante attribuée au préalable dans la première trame (1^{ère}) ; et
(b) pour désactiver le deuxième récepteur (14) correspondant au deuxième contrôleur (15) pendant les tranches de liaison descendante, desdites trames suivantes (2^{è} à 30^{è}), à l'exception d'une tranche correspondant à un segment d'émission pendant lequel un signal de segment a été reçu avec succès.

10. Système de communication sans fil selon la revendication 9, dans lequel un deuxième contrôleur (15) de chacun des terminaux esclaves (10) est configuré, dans chaque première trame (1^{ère}) de supertrames, pour commander un deuxième récepteur (14) correspondant au deuxième contrôleur (15) pour qu'il reçoive un signal de segment sur un canal de fréquence variable dans lesdits différents canaux de fréquence (ch1 à chx).

11. Système de communication sans fil selon l'une quelconque des revendications 1 à 10, dans lequel
le premier contrôleur (5) est configuré pour permettre au premier émetteur (3) d'émettre les signaux de segment des segments d'émission (tsg1 à tsgx) dans la tranche de liaison descendante (B) de la première trame (1^{ère}) et également pour permettre au premier récepteur (4) de fonctionner pendant chaque tranche de liaison montante (D₁ à Dₘ) de la supertrame,
un deuxième contrôleur (15) de chacun des terminaux esclaves (10) est configuré, lorsqu'un deuxième récepteur (14) correspondant au deuxième contrôleur (15) reçoit avec succès un signal de segment dans la tranche de liaison descendante (B) de la première trame (1^{ère}), pour permettre à un deuxième émetteur (13) correspondant au deuxième contrôleur (15) d'émettre un signal hertzien en tant que réponse pendant une tranche de liaison montante attribuée au préalable dans la première trame (1^{ère}), et
le premier contrôleur (5) est configuré, pendant lesdites trames suivantes (2^{è} à 30^{è}), pour commander le premier émetteur (3) pour qu'il émette un signal hertzien sur un canal de fréquence correspondant à une tranche de liaison montante dans la première trame (1^{ère}) pendant laquelle un signal hertzien en tant que réponse a été reçu avec succès par l'intermédiaire du premier récepteur (4).

12. Système de communication sans fil, comprenant :
un terminal maître (1) et des terminaux esclaves (10), qui sont configurés pour effectuer une communication sans fil les uns avec les autres conformément à un protocole d'accès multiples à répartition dans le temps,
dans lequel le terminal maître (1) comprend :
un premier émetteur (3) configuré pour émettre un signal hertzien ;
un premier récepteur (4) configuré pour recevoir un signal hertzien ; et
un premier contrôleur (5) configuré pour commander le premier émetteur (3) et le premier récepteur (4), et
chacun des terminaux esclaves (10) comprend :
un deuxième émetteur (13) configuré pour émettre un signal hertzien ;
un deuxième récepteur (14) configuré pour recevoir un signal hertzien ; et
un deuxième contrôleur (15) configuré pour commander le deuxième émetteur (13) et le deuxième récepteur (14), dans lequel
le premier contrôleur (5) est configuré : pour permettre au premier émetteur (3) d'émettre un signal de tranche contenant un signal de synchronisation sur un canal de fréquence spécifié pendant une tranche de liaison descendante (B) dans une première trame (1^{ère}) d'une supertrame composée de la première trame (1^{ère}) et des trames suivantes (2^{è} à 30^{è}) ; et également pour commander le premier récepteur (4) pour qu'il reçoive les signaux hertziens sur le canal de fréquence spécifié pendant les tranches de liaison montante (D₁ à Dₘ) dans la première trame (1^{ère}),
un deuxième contrôleur (15) de chacun des terminaux esclaves (10) est configuré, lorsqu'un deuxième récepteur (14) correspondant au deuxième contrôleur (15) reçoit avec succès le signal de tranche, pour permettre à un deuxième émetteur (13) correspondant au deuxième contrôleur (15) d'émettre un signal hertzien en tant que réponse pendant une tranche de liaison montante attribuée au préalable dans la première trame (1^{ère}), et
dans lequel le premier contrôleur (5) est configuré, lorsqu'un signal hertzien en tant que réponse n'a pas été reçu avec succès à partir d'au moins l'un des terminaux esclaves (10) pendant les tranches de liaison montante (D₁ à Dₘ) dans la première trame (1^{ère}), pour commander le premier émetteur (3) pour qu'il divise une tranche de liaison descendante (B) dans une deuxième trame (2^{è}) dans lesdites trames suivantes en une pluralité de segments d'émission (tsg1 à tsgx), le signal de synchronisation étant contenu dans un signal de segment de chacun des segments d'émission (tsg1 à tsgx), et également pour émettre séquentiellement les signaux de segment des segments d'émission (tsg1 à tsgx) sur les différents canaux de fréquence (ch1 à chx) respectifs, ledit signal de segment étant un signal hertzien (tsg1 à tsgx) émis pendant chacun desdits segments d'émission dans la tranche de liaison descendante (B),
un deuxième contrôleur (15) de chacun des terminaux esclaves (10) est configuré, lorsqu'un signal de tranche contenant un signal de synchronisation n'a pas été reçu avec succès du terminal maître (1) dans la première trame (1^{ère}), pour commander un deuxième récepteur (14) correspondant au deuxième contrôleur (15) pour qu'il reçoive le signal de segment sur un canal de fréquence variable sélectionné parmi lesdits différents canaux de fréquence (ch1 à chx) dans la deuxième trame (2^{è}).

13. Système de communication sans fil selon la revendication 12, dans lequel
le premier contrôleur (5) est configuré, lorsque le premier contrôleur (5) ne reçoit pas un signal hertzien en tant que réponse à partir de l'un quelconque des terminaux esclaves (10) pendant les tranches de liaison montante (D₁ à Dₘ) dans la première trame (1^{ère}), pour diviser une tranche de liaison descendante (B) dans la deuxième trame (2^{è}) en une pluralité de segments d'émission (tsg1 à tsgx), un signal hertzien pour demander une réponse à un terminal esclave sans réponse étant contenu dans un signal de segment de chacun des segments d'émission (tsg1 à tsgx), et également pour émettre séquentiellement les signaux de segment des segments d'émission (tsg1 à tsgx) sur différents canaux de fréquence (ch1 à chx) respectifs, et
un deuxième contrôleur (15) de chacun des terminaux esclaves (10) est configuré, lorsqu'un deuxième récepteur (14) correspondant au deuxième contrôleur (15) a reçu le signal hertzien pour demander la réponse, pour commander un deuxième émetteur (13) correspondant au deuxième contrôleur (15) pour qu'il émette un signal hertzien en tant que réponse pendant une tranche de liaison montante attribuée au préalable dans la deuxième trame (2^{è}) sur un canal de fréquence qui est différent du canal de fréquence spécifié.

14. Système de communication sans fil selon la revendication 13, dans lequel un deuxième contrôleur (15) de chacun des terminaux esclaves (10) est configuré, lorsqu'un deuxième récepteur (14) correspondant au deuxième contrôleur (15) a reçu les signaux hertziens pour demander la réponse sur plusieurs canaux de fréquence, pour sélectionner l'un quelconque desdits plusieurs canaux de fréquence, et pour commander un deuxième émetteur (13) correspondant au deuxième contrôleur (15) pour qu'il émette un signal hertzien en tant que réponse sur le canal de fréquence sélectionné.

15. Système de communication sans fil selon la revendication 13 ou 14, dans lequel un deuxième contrôleur (15) de chacun des terminaux esclaves (10) est configuré, lorsqu'un deuxième récepteur (14) correspondant au deuxième contrôleur (15) a reçu le signal hertzien pour demander la réponse,
pour sélectionner un canal de fréquence qui n'a pas été utilisé pour émettre le signal de réponse dans la supertrame actuelle parmi une pluralité de canaux de fréquence candidats, et
pour commander un deuxième émetteur (13) correspondant au deuxième contrôleur (15) pour qu'il émette un signal hertzien en tant que réponse sur le canal de fréquence sélectionné parmi les canaux de fréquence non sélectionnés dans lesdits différents canaux de fréquence (ch1 à chx).
